# EUROPEAN PATENT APPLICATION

(11) **EP 1 406 193 A1**
(43) Date of publication of application: **07.04.2004**
(21) Application number: 02741423.4
(22) Date of filing: 05.07.2002
(51) Int. Cl.: G06F 17/60, G06F 12/14

(54) **CONTENT MANAGEMENT METHOD, CONTENT MANAGEMENT APPARATUS, CONTENT REPRODUCTION APPARATUS, AND CONTENT RECORDING APPARATUS**

(30) Priority: 09.07.2001 JP 2001208025
(71) Applicant: MATSUSHITA ELECTRIC INDUSTRIAL CO., LTD., Kadoma-shi, Osaka 571-8501 (JP)
(72) Inventor: SATO, Mitsuhiro, Atsugi-shi, Kanagawa 243-0216 (JP); SHIMOJIMA, Takashi, Tokyo 144-0046 (JP); NOGUCHI, Naohiko, Yokohama-shi, Kanagawa 222-0031 (JP); MATSUI, Shinichi, Kobe-shi, Hyogo 658-0073 (JP); MURASE, Kaoru, Ikoma-gun, Nara 636-0133 (JP); HARADA, Shunji, Osaka-shi, Osaka 557-0045 (JP)
(74) Representative: Grünecker, Kinkeldey, Stockmair & Schwanhäusser Anwaltssozietät
(86) International application number: PCT/JP2002/006872
(87) International publication number: WO 2003/012708

(57) **Abstract**

The present invention makes it possible to perform a use time limit control by means of absolute time and date and relative time and date by retaining use date information and use time period information as use restriction information on content and by updating the use date information with a time and date calculated from current time and date 120 and use time period information. In addition, the invention prevents an unauthorized viewing of content, which may be done by willfully turning a terminal clock back, where such a prevention is achieved by limiting an approval for use of content only in a case where it is confirmed that current time and date is after reference time and date, found through a comparison of the current time and date with the reference time and date, where a terminal or storage medium 110 retains such reference time and date information that is subjected to updating at a specific timing.

## Description

### FIELD OF THE INVENTION

The present invention relates to a method for managing content to be stored in storage media or inside apparatuses, content playback / storage / management apparatuses for implementing such a method, and a storage medium storing a program for loading the content management method as well as the program itself, and in particular, the invention aims to provide an increased efficiency in management of a viewing time limit and a use time limit on content.

### BACKGROUND ART

Recently, there has been an increasing demand for digital content distribution services making use of communications or broadcasting.

For example, newspaper story distribution services have been conceived, such as one in which newspaper accounts are downloaded every morning to a cellular phone to be stored into a storage medium attached thereto, and the news accounts are presented for reading by connecting the storage medium to other apparatus such as a TV set whenever it is demanded. Needs for distribution of content with a limited time period are also growing, such as one in which viewing time limit information is attached to downloaded video content and music content for allowing such content to be viewed only for a certain limited time period.

In an application where content is distributed electronically to be stored in apparatuses or storage media, it is important how to prevent unauthorized use of stored content from occurring for the protection of a right of a copyright holder. Though it goes without saying that it is necessary to provide a scheme which eliminates the risk of unauthorized copying or tampering, especially, these days, there has been a growing importance of a freer content use control scheme which also controls the number of times of content viewing and viewing time limit thereof.

Conventionally, a lot of schemes for ensuring compliance with a use time limit attached to distributed data have been studied. Many among such schemes compare use time limit information with current time and date, and then approve use of data in question in a case where the current time and date fits in a time period indicated by the use time limit (e.g. the method disclosed in Japanese Laid-Open Patent Publication No. H10-222063).

As described above, at a terminal side where data is put to use, it is popular to employ a checking method which applies a check to data to which a use time limit is attached in terms of whether current time and date which is indicated by an internal clock held in the terminal is within a designated use time limit or not. In many cases, however, because a user is able to set the time of day at his / her terminal side arbitrarily, it is possible to use data not in compliance with a use time limit by tampering its internal clock as though current time and date was within the time limit.

As a method for solving such a problem, for example, a method disclosed in Japanese Laid-Open Patent Publication No. H10-207779 is cited. According to the cited method, a terminal equipment queries an information management center at the time when the terminal demands for use of data, and the information management center transmits use approval information to the terminal only in a case where it is judged to be in compliance with limitations on a use time period and on use count, where the above problem is overcome by not using a clock at the terminal side.

However, according to conventional methods, either one of use time limit designation by means of absolute date conditions such as "from *xx yy* (month, date) to *xx zz* (month, date)" and use time limit designation by means of relative date conditions such as "for *vv* days starting at the time of downloading" is adopted, and accordingly, it has been hard to designate a complex use time limit such as "for the maximum *vv* days during a time period from *xx yy* (month, date) to *xx zz* (month, date)."

Moreover, because a query is always issued to an information management center at the time of each use according to the method disclosed in the Japanese Laid-Open Patent Publication No H10-207779, there have been problems which prevent users from using data in an easy manner; among such problems are: disadvantages of an inevitable necessity to provide a terminal apparatus with communications means, of communications cost, or, for example, of unavailability of data at a location where a radio wave does not reach.

### DESCRIPTION OF THE INVENTION

The present invention is devised to solve these problems, and as its first object, the invention aims to provide a content management method which makes it possible to designate a use time limit with a higher degree of freedom, and to provide a program for implementation thereof, and a content playback apparatus and a content management apparatus in which such a program is installed.

In addition, as its second object, the invention aims to provide a content management method for preventing an unauthorized use of data which is done by the tampering of the time of day, and to provide a program for implementation thereof, and a content playback apparatus, a content storage apparatus, and a content management apparatus in which such a program is installed.

These objects are achieved by setting a use time limit on content flexibly with an allowed use start time and date, an allowed use end time and date, and use time period information designating the length of an allowed use time period incorporated in use restriction information on content.

Furthermore, these objects are achieved by limiting an approval for use of content only in a case where it is confirmed through comparison of current time and date with reference time and date that the current time and date is after the reference time and date, where the reference time and date information which is subjected to updating at a specific timing is retained in a terminal or a storage medium; and accordingly, it becomes possible to prevent an unauthorized viewing of content which is done by turning back a terminal clock.

### BRIEF DESCRIPTION OF THE DRAWINGS

FIG. 1 is a configuration diagram illustrating acontentplaybackapparatusaccordingtoEmbodiment 1 of the present invention;
FIG. 2 is a configuration diagram illustrating the storage format of content and its use restriction information in storage medium 110 according to Embodiment 1 of the present invention;
FIG. 3 is a flowchart illustrating the procedures of content playback processing according to Embodiment 1 of the present invention;
FIG. 4 is a flowchart illustrating the updating procedures of use date information 230 according to Embodiment 1 of the present invention;
FIG. 5 is a flowchart illustrating the procedures of playback approval / disapproval judgment according to Embodiment 1 of the present invention;
FIG. 6 is a configuration diagram illustrating a content management apparatus according to Embodiment 2 of the present invention;
FIG. 7 is a configuration diagram illustrating the storage format of content and its use restriction information managed by content retaining section 602 according to Embodiment 2 of the present invention;
FIG. 8 is a flowchart illustrating the procedures of content move processing from content retaining section 602 to storage medium 110 according to Embodiment 2 of the present invention;
FIG. 9 is a flowchart illustrating the procedures of move and copy approval / disapproval judgment according to Embodiment 2 of the present invention;
FIG. 10 is a flowchart illustrating the procedures of content copy processing from content retaining section 602 to storage medium 110 according to Embodiment 2 of the present invention;
FIG. 11 is a flowchart illustrating the procedures of the second content copy processing from content retaining section 602 to storage medium 110 according to Embodiment 2 of the present invention;
FIG. 12 is a configuration diagram illustrating a content playback apparatus according to Embodiment 3 of the present invention;
FIG. 13 is a configuration diagram illustrating the storage format of content and its use restriction information in storage medium 1210 according to Embodiment 3 of the present invention;
FIG. 14 is a flowchart illustrating the procedures of content playback processing according to Embodiment 3 of the present invention;
FIG. 15 is a flowchart illustrating the updating procedures of reference time and date information 1350 according to Embodiment 3 of the present invention;
FIG. 16 is a flowchart illustrating the procedures of playback approval / disapproval judgment according to Embodiment 3 of the present invention;
FIG. 17 is a configuration diagram illustrating the second storage format of content and its use restriction information in storage medium 1210 according to Embodiment 3 of the present invention;
FIG. 18 is a flowchart illustrating the updating procedures of reference time and date information 1350 having the configuration of FIG. 17 according to Embodiment 3 of the present invention;
FIG. 19 is a configuration diagram illustrating a content storage apparatus according to Embodiment 4 of the present invention;
FIG. 20 is a flowchart illustrating the procedures of content storage processing according to Embodiment 4 of the present invention;
FIG. 21 is a configuration diagram illustrating a content management apparatus according to Embodiment 5 of the present invention;
FIG. 22 is a configuration diagram illustrating the storage format of content and its use restriction information managed by content retaining section 2102 according to Embodiment 5 of the present invention;
FIG. 23 is a flowchart illustrating the procedures of content copy processing from content retaining section 2102 to storage medium 1210 according to Embodiment 5 of the present invention;
FIG. 24 is a flowchart illustrating the procedures of move and copy approval / disapproval judgment according to Embodiment 5 of the present invention;
FIG. 25 is a flowchart illustrating the procedures of reference time and date information updating according to Embodiment 5 of the present invention;
FIG. 26 is a configuration diagram illustrating a reference time and date correction apparatus according to Embodiment 6 of the present invention;
FIG. 27 is a schematic diagram for illustration of a content management method according to the present invention;
FIG. 28 is a schematic diagram for illustration of a content management method according to the present invention;
FIG. 29 is a schematic diagram for illustration of a content management method according to the present invention;
FIG. 30 is a schematic diagram for illustration of a content management method according to the present invention;
FIG. 31 is a schematic diagram for illustration of a content management method according to the present invention;
FIG. 32 is a schematic diagram for illustration of a content playback apparatus according to the present invention;
FIG. 33 is a schematic diagram for illustration of a content management apparatus according to the present invention;
FIG. 34 is a schematic diagram for illustration of a content management method according to the present invention;
FIG. 35 is a schematic diagram for illustration of a content management method according to the present invention;
FIG. 36 is a schematic diagram for illustration of a content management method according to the present invention;
FIG. 37 is a schematic diagram for illustration of a content management method according to the present invention;
FIG. 38 is a schematic diagram for illustration of a content playback apparatus according to the present invention; and
FIG. 39 is a schematic diagram for illustration of a content storage apparatus according to the present invention.

### BEST MODE FOR CARRYING OUT THE INVENTION

Embodiments of the present invention will be described below with reference to the accompanying drawings. Incidentally, the present invention is in no case limited to these embodiments; the present invention is able to be exploited in various kinds of modes within the range where the gist of the present invention is maintained.

### (Embodiment 1)

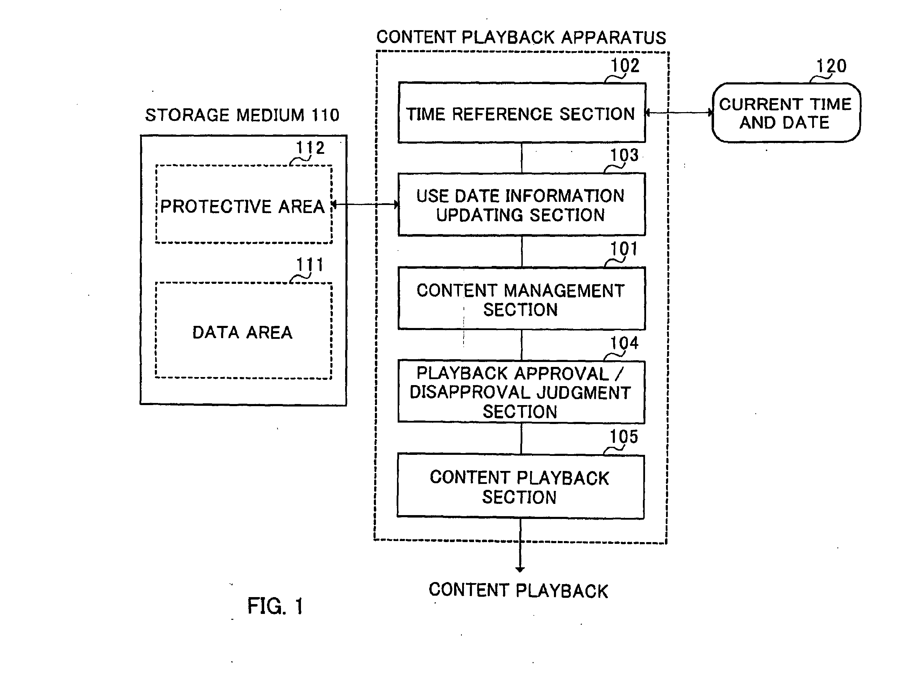

FIG. 1 shows the configuration of a content playback apparatus according to Embodiment 1 of the present invention. This content playback apparatus comprises content management section 101 that manages content stored in storage medium 110, time reference section 102 that acquires current time and date 120, use date information updating section 103 that rewrites use date information stored in storage medium 110, playback approval / disapproval judgment section 104 that judges whether a playback at the current time and date is allowable or not with reference to the use date information, and content playback section 105 that plays the content back.

Time reference section 102 for acquiring current time and date 120 is usually configured to acquire current time and date by referring to an internal clock held by a content playback apparatus, however, this section may be configured in such a way that it refers to any external clock alternatively, such as a GPS or a server connected via a network.

Content management section 101 manages content stored in storage medium 110. Storage medium 110 is a medium having data area 111 and protective area 112. Herein, protective area 112 is a special area protected so that a user is not able to write and read directly there.

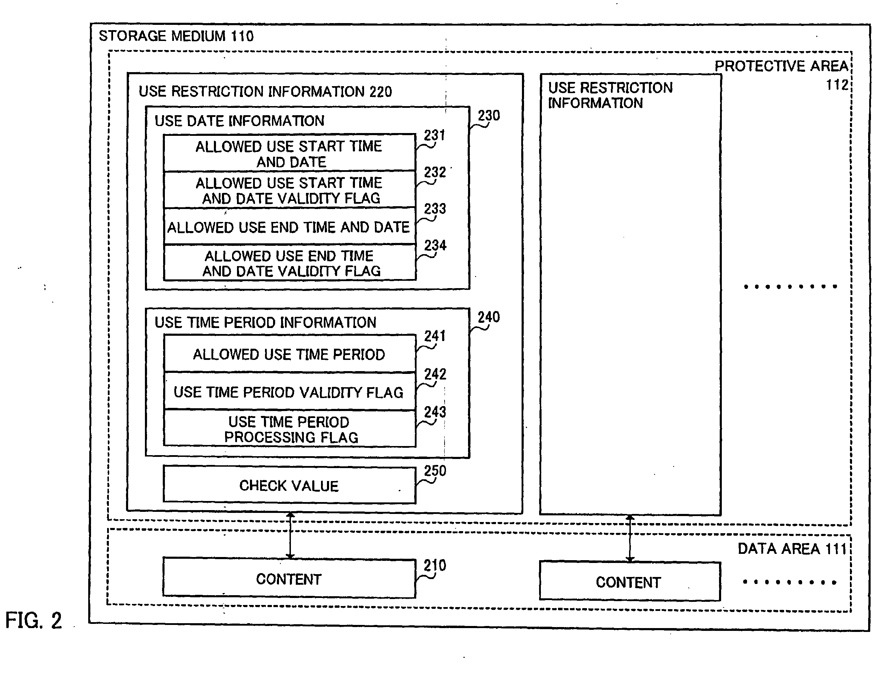

FIG. 2 is a configuration diagram illustrating the storage format of content and its use restriction information in storage medium 110 of FIG. 1.

Content 210 is stored in data area 111, whereas its use restriction information 220 is stored in protective area 112 in association with content 210. Content 210 may be subjected to encryption.

Use restriction information 220 contains use date information 230, use time period information 240, and check value 250. Use restriction information 220 may contain other use limitations such as, for example, maximum allowed playback count of content, and so on. In addition, use restriction information 220 as a whole may be subjected to encryption.

Use date information 230 is made up of allowed use start time and date 231, allowed use start time and date validity flag 232, allowed use end time and date 233, and allowed use end time and date validity flag 234.

Allowed use start time and date 231 and allowed use end time and date 233 is information in which the start point and the end point of allowable playback time period for content is specified each with an absolute date, such as in "from *xx yy* (month, date) to *xx zz* (month, date)." It is not always necessary to designate both of allowed use start time and date 231 and allowed use end time and date 233. Instead, it is possible to designate either the start time and date or the end time and date only as in, for example, "available anytime after *xx yy* (month, date)" or "available anytime before *xx yy* (month, date)." In addition, it is also possible to designate neither of allowed use start time and date 231 and allowed use end time and date 233, in other words, make no designation of use date.

Each of allowed use start time and date validity flag 232 and allowed use end time and date validity flag 234 is a flag indicating whether allowed use start time and date 231 or allowed use end time and date 233 is designated or not, where each of the flag shows that allowed use start time and date 231 is not designated in a case where allowed use start time and date validity flag 232 is a value indicating invalid, whereas allowed use end time and date 233 is not designated in a case where allowed use end time and date validity flag 234 is a value indicating invalid. In this embodiment, it is assumed to show that it is valid in a case where the value of a flag is "1", while it is invalid in a case where the value of the flag is "0." Such designation may also be implemented by designating an invalid value such as 0 in allowed use start time and date 231 or allowed use end time and date 233, and if done so, there is no necessity to separately provide allowed use start time and date validity flag 232 or allowed use end time and date validity flag 234.

Use time period information 240 is information in which a relative allowed use time period such as "available for 30 days" is specified, and this information is made up of allowed use time period 241, use time period validity flag 242, and use time period processing flag 243. Use time period validity flag 242 is a flag indicating the validity of allowed use time period 241, and the flag shows that allowed use time period 241 is not designated in a case where use time period validity flag 242 is a value indicating invalid. In this embodiment, it is assumed to show that it is valid in a case where the value of a flag is "1", while it is invalid in a case where the value of the flag is "0." Such designation may also be implemented by designating a value indicating infinite as a use time period, and if done so, there is no necessity to provide use time period validity flag 242.

Use time period processing flag 243 is a flag indicating whether use time period information has been subjected to processing or not, and the flag is set to be a value indicating "processed" in a case where use time period information 240 has been interpreted by use date information updating section 103, which is described below, and where use date information 230 has been updated. In this embodiment, it is assumed to show that it has been subjected to processing in a case where the value of a flag is "1", while it has not been processed yet in a case where the value of the flag is "0." It is noted that, a specific rule may be provided to regard that use time period information has been subjected to processing in a case where, for example, allowed use time period 241 is a value indicating 0, thereby judging whether the use time period information has been processed or not yet, and if done so, there is no necessity to provide use time period processing flag 243.

Check value 250 is a value for checking to make sure that entire use restriction information 220 has not been tampered. A predetermined value such as, for example, "1111" is predefined as a check value, which indicates that use restriction information 220 has been tampered if the check value is not the predetermined value. It is not necessary to provide check value 250 in a case where there is no possibility of tampering, as in a case where use restriction information 220 is stored in protective area in an encrypted form.

Use date information updating section 103. updates allowed use start time and date 231 and allowed use end time and date 233 by using use time period information 240 and current time and date 120. This updating is done just once at the time of, for example, initial playback of content, where use date information is rewritten by setting the current time of day at the time of updating as an allowed use start time and date while setting the point in time where an allowed use time period has elapsed starting from the allowed use start time and date as an allowed use end time and date (herein, however, in a case where the point in time at the elapsing of the allowed use time period is after the original allowed use end time and date, then, the original allowed use end time and date remains as allowed use end time and date intact).

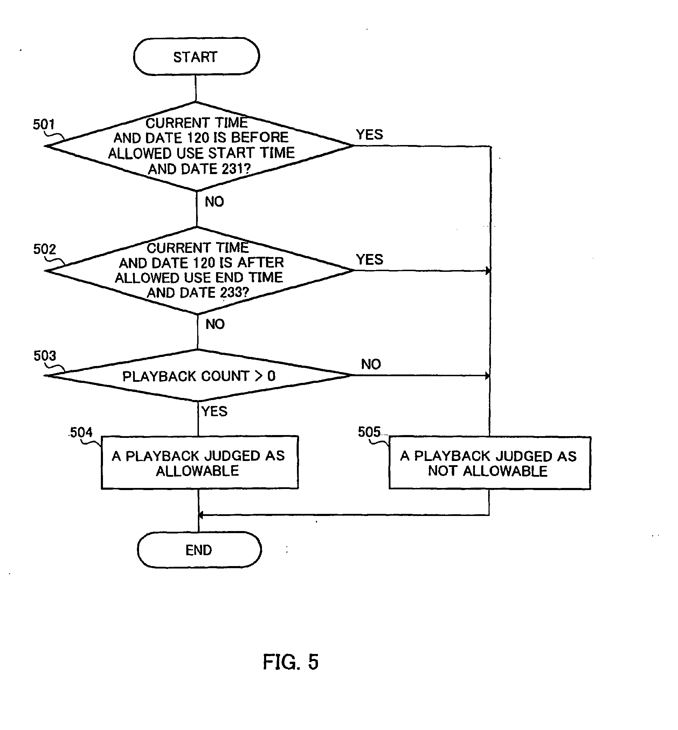

By referring to this use date information 230, playback approval / disapproval judgment section 104 judges whether the content is allowable to be played back or not. In a case where it is judged by playback approval / disapproval judgment section 104 as allowable to be played back, content 210 is sent from content management section 101 to content playback section 105, and content playback is executed. Incidentally, in the case of this embodiment, it is assumed that use restriction information 220 in storage medium 110 is pre-stored as allowed playback count information indicating the maximum allowed playback count of content, and use date information updating section 103 of a content playback apparatus decrements the allowed playback count information at each time of a content playback. Once after the allowed playback count information reaches to "0", playback approval / disapproval judgment section 104 is supposed not to approve the playback of the content (described later with reference to FIG. 5). In this way, it is devised to make it possible to put restrictions on the playback of content based on playback counts in addition to restrictions thereon based on use date information.

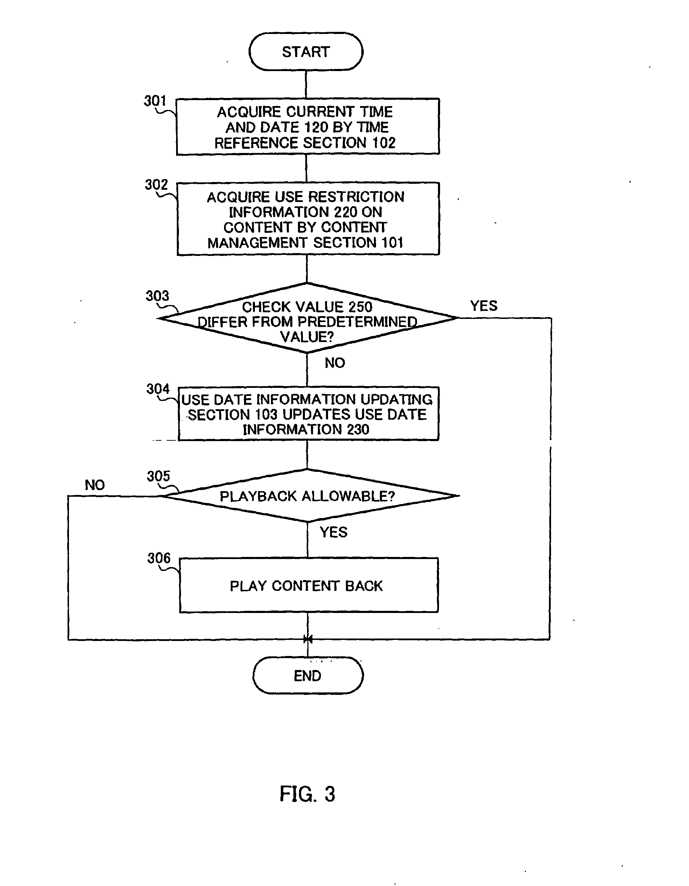

With reference to FIG. 3, an explanation is given on content playback processing according to the present embodiment. FIG. 3 is a flowchart illustrating the procedures of content playback processing according to the present embodiment.

It is noted that, in this embodiment, it is assumed that the value of use time period processing flag 243 is set to be "0" up to the time of initial playback of content, and the updating processing of use date information is done at the time of the initial playback.

Step 301: Current time and date 120 is acquired by time reference section 102.

Step 302: Use restriction information 220 on content to be played back is acquired by content management section 101.

Step 303: Check value 250 of use restriction information 220 is checked. Playback processing is aborted in a case where check value 250 is different from the predetermined value. If not, the processing goes to step 304.

Step 304: Use date information updating section 103 updates use date information 230. Details on this processing will be described later.

Step 305: By comparing the use date information with the current time and date, playback approval / disapproval judgment section 104 judges whether the content is allowable to be played back or not. Details on this processing will be described later. In a case where the playback of the content is judged as allowable, the processing goes to step 306. If not, the playback processing is aborted.

Step 306: The content is acquired by content management section 101.

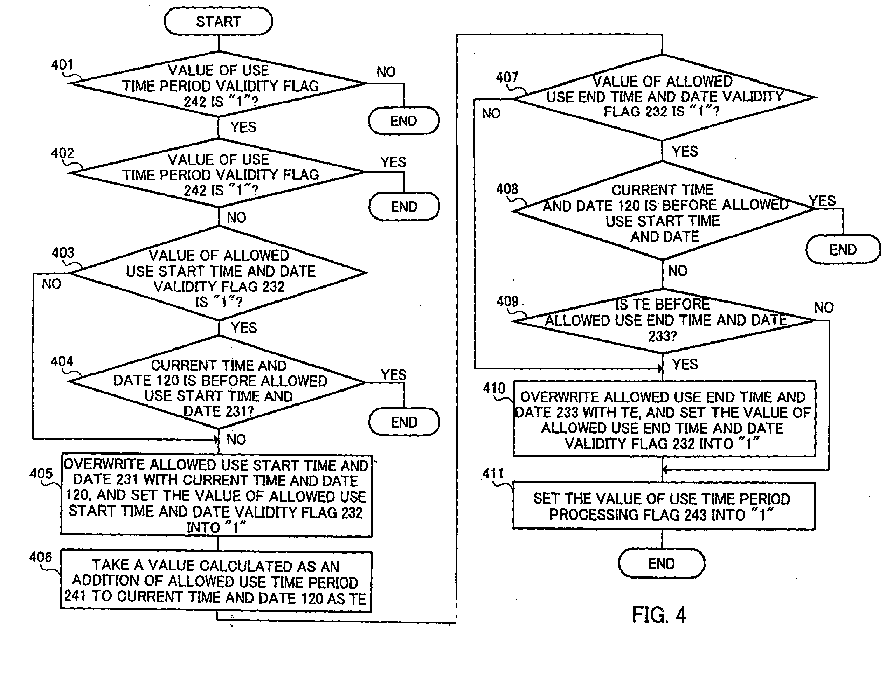

Next, the procedures for updating of use date information 230 by use date information updating section 103 in step 304 of FIG. 3 is described below with reference to FIG. 4. FIG. 4 is a flowchart illustrating the updating procedures of use date information 230.

Step 401: The value of use time period validity flag 242 is checked. In a case where the use time period validity flag is "1", the processing goes to step 402. Otherwise the updating processing of use date information is ended.

Step 402: The value of use time period processing flag 243 is checked. In a case where the value of use time period processing flag 243 is "1", that is, the updating of the use date information has already been done, the updating processing of the use date information is ended. If not, the processing goes to step 403.

Step 403: The value of allowed use start time and date validity flag 232 of use date information 230 is checked. In a case where the value of allowed use start time and date validity flag 232 is "1", the processing goes to step 404. If not, the processing goes to step 405.

Step 404: Current time and date 120 is compared with allowed use start time and date 231. In a case where current time and date 120 is a time and date before allowed use start time and date 231, the updating processing of the use date information is ended. If not, the processing goes to step 405.

Step 405: Allowed use start time and date 231 is overwritten with current time and date 120, and the value of allowed use start time and date validity flag 232 is set into "1."

Step 406: A value TE is calculated as an addition of allowed use time period 241 to current time and date 120.

Step 407: The value of allowed use end time and date validity flag 234 of use date information 230 is checked. In a case where the allowed use end time and date validity flag is "1", the processing goes to step 408. If not, the processing goes to step 410.

Step 408: Current time and date 120 is compared with allowed use end time and date 233. In a case where current time and date 120 is a time and date after allowed use end time and date 233, the updating processing of the use date information is ended. If not, the processing goes to step 409.

Step 409: TE is compared with allowed use end time and date 233. In a case where TE is a time and date before allowed use end time and date 233, the processing goes to step 410. If not, the processing goes to step 411.

Step 410: Allowed use end time and date 233 is overwritten with TE, and the value of allowed use end time and date validity flag 234 is set into "1."

Step 411: The value of use time period processing flag 243 is set into "1."

Through the above steps, it is possible to update use date information 230 by using current time and date 120 and use time period information 240.

It is noted that, herein, an explanation is given with an example case where use date updating processing is carried out only in a case where use date information 230 has been designated in advance, and where current time and date 120 is after allowed use start time and date 231 but before allowed use end time and date 233; notwithstanding the foregoing, it may be configured to update use date information 230 always by using current time and date 120 and use time period information 240 without taking into account the relation between current time and date 120 and allowed use start time and date 231 as well as the relation between current time and date 120 and allowed use end time and date 233. In such a configuration, steps 403, 404, 407, and 408 in FIG. 4 are not necessary.

In addition, herein, an explanation is given with an example case where allowed use end time and date 233 is not subjected to rewriting in a case where allowed use end time and date 233 is before TE, however, it may be configured to always rewrite allowed use end time and date 233 with TE. In such a configuration, step 409 in FIG. 4 is not necessary.

Next, an explanation is given on the procedures of playback approval / disapproval judgment by playback approval / disapproval judgment section 104 which is illustrated in step 305 of FIG. 3. FIG. 5 is a flowchart illustrating the procedures of playback approval / disapproval judgment in playback approval / disapproval judgment section 104.

Step 501: Allowed use start time and date 231 is compared with current time and date 120. In a case where current time and date 120 is before allowed use start time and date 231, the processing goes to step 505. If not, the processing goes to step 502.

Step 502: Allowed use end time and date 233 is compared with current time and date 120. In a case where current time and date 120 is after allowed use end time and date 233, the processing goes to step 505. If not, the processing goes to step 503.

Step503: In a case where allowed playback count information on content is greater than "0", the processing goes to step 504. If not, the processing goes to step 505.

Step 504: A judgment on playback is made as allowable.

Step 505: A judgment on playback is made as not allowable.

Through the above procedures, it is possible to judge whether it is allowable or not to execute the playback of content which is subjected to checking of its use time limit.

In the present embodiment, an explanation is given by showing an example case where, if use time period information 240 has been designated, the interpretation processing of use time period information 240 is firstly executed to update use date information 230. With such a configuration, it becomes possible to judge whether playback is allowable or not by playback approval / disapproval judgment section 104's referring to use date information 230 only, which simplifies processing at the time of content playback execution. However, it is also possible to adopt a configuration which does not comprise use date information updating section 103 but stores the time and date at which actual use is started in use time period information 240, and in which playback approval / disapproval judgment section 104 interprets both of use date information 230 and use time period information 240 concurrently at the time of playback to judge whether the playback is allowable or not.

It is noted that, in the present embodiment, an explanation is given by showing an example case where the updating processing of use date information 230 is done at the time of initial playback of content, however, the updating processing of use date information 230 may be executed at any other point in time such as, for example, at the time of downloading the content.

In addition, in the present embodiment, though an explanation is given by showing an example case where use restriction information on content is stored in protective area, the use restriction information may be stored in data area in a case where there is no possibility of tampering of the use restriction information, as in a case where the use restriction information has been subjected to encryption.

Furthermore, in the present embodiment, though an explanation is given by showing an example case where content and its use restriction information is stored in a storage medium, it may be configured in such a way that the content and its use restriction information is stored in any internal storage area of a content playback apparatus (such as in a hard disc).

By configuring a content playback apparatus as described above, it becomes possible for a content distribution source to designate a use time limit with a high degree of freedom, and it becomes possible for the content playback apparatus to execute the playback of content in compliance with the designated use time limit.

### (Embodiment 2)

In Embodiment 2, the management of content and its use restriction information when the content is moved or copied is explained.

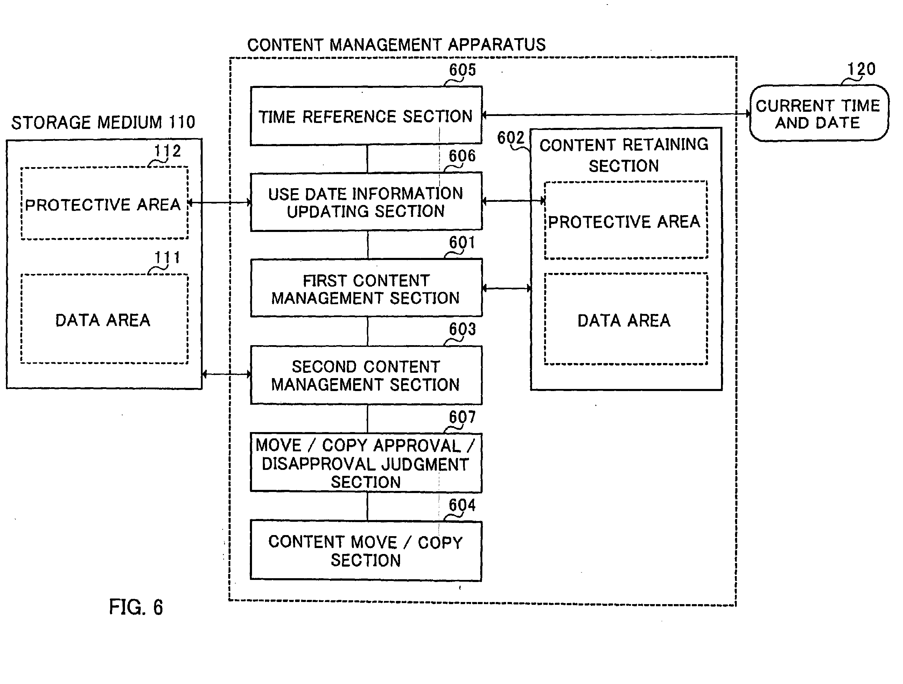

FIG. 6 is a configuration diagram illustrating a content management apparatus according to Embodiment 2 of the present invention, where the apparatus moves / copies content. This content management apparatus comprises content retaining section 602 that retains content, first content management section 601 that manages the content retained in content retaining section 602, second content management section 603 that manages content stored in storage medium 110, content move / copy section 604 that moves / copies content between content retaining section 602 and storage medium 110, move / copy approval / disapproval judgment section 607 that judges whether the moving / copying thereof is allowed or not, time reference section 605 that acquires current time and date 120, and use date information updating section 606 that rewrites use date information stored in content retaining section 602 and storage medium 110.

First content management section 601 manages content and its use restriction information retained by content retaining section 602. Content retaining section 602 is a storage medium such as a hard disc in a personal computer.

Second content management section 603 manages content stored in storage medium 110. Storage medium 110 has the same configuration as that illustrated in FIG. 2 according to Embodiment 1.

Content move / copy section 604 is a section that copies or moves content and its use restriction information retained in content retaining section 602 to storage medium 110, or copies or moves content and its use restriction information retained in storage medium 110 to content retaining section 602.

Time reference section 605 is usually configured to acquire current time and date 120 by referring to an internal clock held by a content management apparatus, however, this section may be configured in such a way that it refers to any external clock alternatively, such as a GPS or a server connected via a network.

Use date information updating section 606 updates allowed use start time and date 231 and allowed use end time and date 233 by using use time period information 240 and current time and date 120.

Move / Copy approval / disapproval judgment section 607 judges whether content is allowable for copying or moving or not.

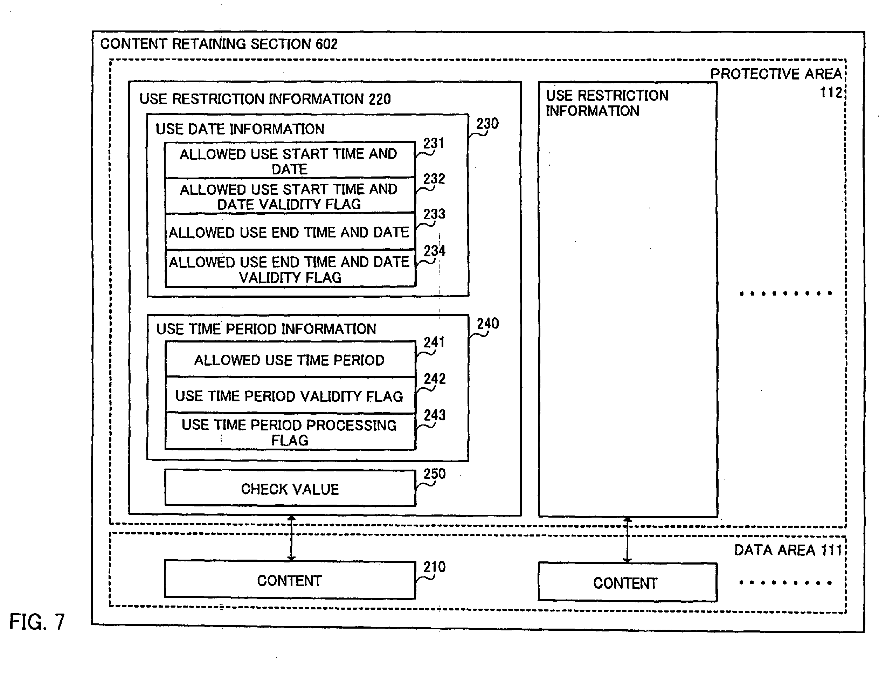

FIG. 7 is a configuration diagram illustrating the storage format of content and its use restriction information managed by content retaining section 602. Content and its use restriction information are retained in the same format in storage medium 110.

In this embodiment, it is explained on a case where use date information updating section 606 updates use date information 230 at the time of copying or moving of content. With such a configuration, because it is possible to perform interpretation processing of the use time period designated by use time period information 240 at the time of moving or copying of content, it becomes unnecessary to perform interpretation processing of the use time period at the side of a content playback apparatus, which simplifies the configuration of the content playback apparatus.

It is noted that, in this embodiment, it is assumed that the value of use time period processing flag 243 is set to be "0" up to the time of moving or copying of content, and the updating processing of use date information is done at the time of the moving or the copying of the content.

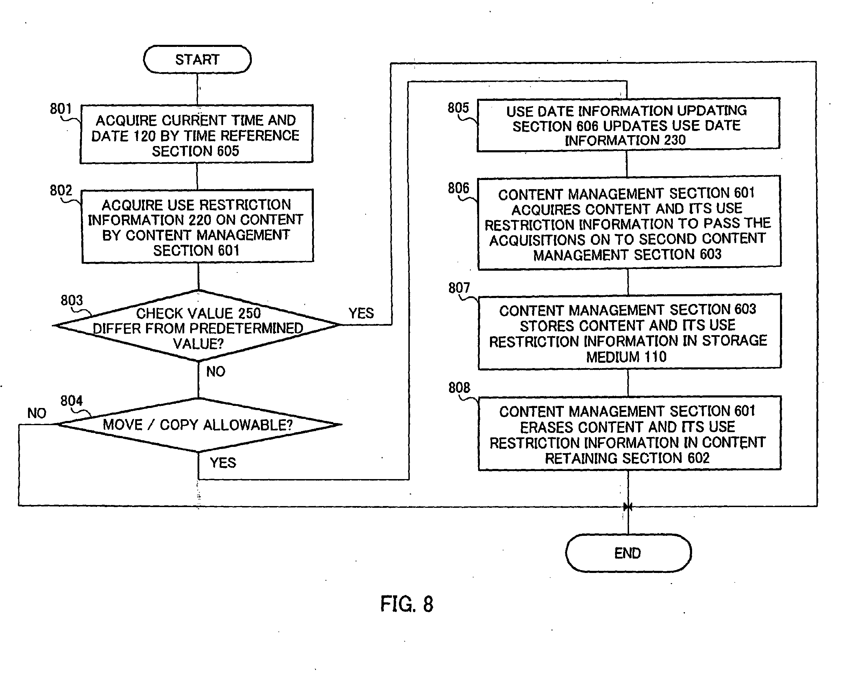

With reference to FIG. 8, an explanation is given on the procedures of content move processing according to the present embodiment. FIG. 8 is a flowchart illustrating the procedures of content move processing from content retaining section 602 to storage medium 110 according to the present embodiment.

Step 801: Current time and date 120 is acquired by time reference section 605.

Step 802: Use restriction information 220 on content to be moved is acquired by first content management section 601.

Step 803: Check value 250 of use restriction information 220 is checked. Move processing is aborted in a case where check value 250 is different from the predetermined value.

Step 804: Move / Copy approval / disapproval judgment section 607 judges whether content is allowable for moving or not. In a case where the moving of the content is judged as allowable, the processing goes to step 805. If not, the move processing is aborted.

Step 805: Use date information updating section 606 updates use date information 230.

Step 806: First content management section 601 acquirescontentanditsuserestrictioninformation to pass the acquisitions on to second content management section 603.

Step 807: Second content management section 603 stores content and its use restriction information in storage medium 110.

Step 808: First content management section 601 erases content and its use restriction information in content retaining section 602.

The updating procedure of use date information in step 805 is the same as that illustrated with the flowchart in FIG. 4 according to Embodiment 1.

It is noted that, herein, an explanation is given by showing an example case where the updating of use date information 230 is done after having judged whether the moving of content is allowable or not, however, it may be configured in such a way that the moving of the content is done after having updated use date information 230 without judging the approval / disapproval of the moving of the content. In such a configuration, step 804 in FIG. 8 may be omitted.

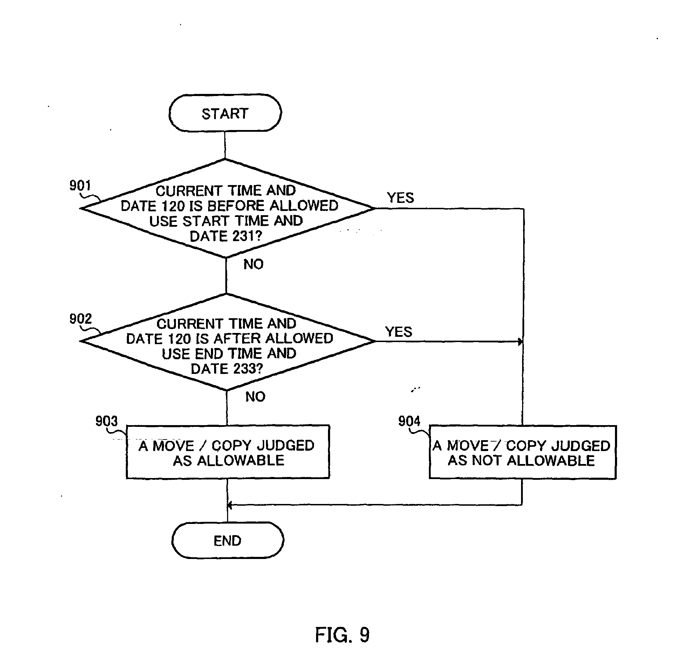

Next, the procedures for a move / copy approval / disapproval judgment which is made by move / copy approval / disapproval judgment section 607 in step 804 of FIG. 8 is described below with reference to FIG. 9. FIG. 9 is a flowchart illustrating the procedures for making a move / copy approval / disapproval judgment in move / copy approval / disapproval judgment section 607.

Step 901: Allowed use start time and date 231 is compared with current time and date 120. In a case where current time and date 120 is before allowed use start time and date 231, the processing goes to step 904. If not, the processing goes to step 902.

Step 902: Allowed use end time and date 233 is compared with current time and date 120. In a case where current time and date 120 is after allowed use end time and date 233, the processing goes to step 904. If not, the processing goes to step 903.

Step 903: A judgment on moving / copying is made as allowable.

Step 904: A judgment on moving / copying is made as not allowable.

Through the above procedures, it is possible to judge whether it is allowable or not to execute the moving / copying of content which is subjected to checking of its use time limit. It is noted that, herein, though a check is done as to whether the moving / copying is allowed or not by means of a use time limit only, an additional step such as, for example, a check by means of vacant capacity of a storage medium may be provided.

In addition, herein, an explanation is given with an example case where moving / copying is allowed only in a case where allowed use start time and date 231 is a time and date before current time and date 120, and in addition to that, where allowed use end time and date 233 is a time and date after current time and date 120; notwithstanding the foregoing, it may alternatively be configured to allow moving / copying in a case where either of the conditions is met: that is, provided that allowed use start time and date 231 is a time and date before current time and date 120, or that allowed use end time and date 233 is a time and date after current time and date 120.

With a content management apparatus configured as described above, it becomes possible to move content and its use restriction information from content retaining section 602 to storage medium 110, and at the same time, to update use date information.

It is noted that, herein, though an explanation is given with an example case where content and its use restriction information is moved from content retaining section 602 to storage medium 110, the moving thereof from storage medium 110 to content retaining section 602 is also implementable in accordance with the same procedures.

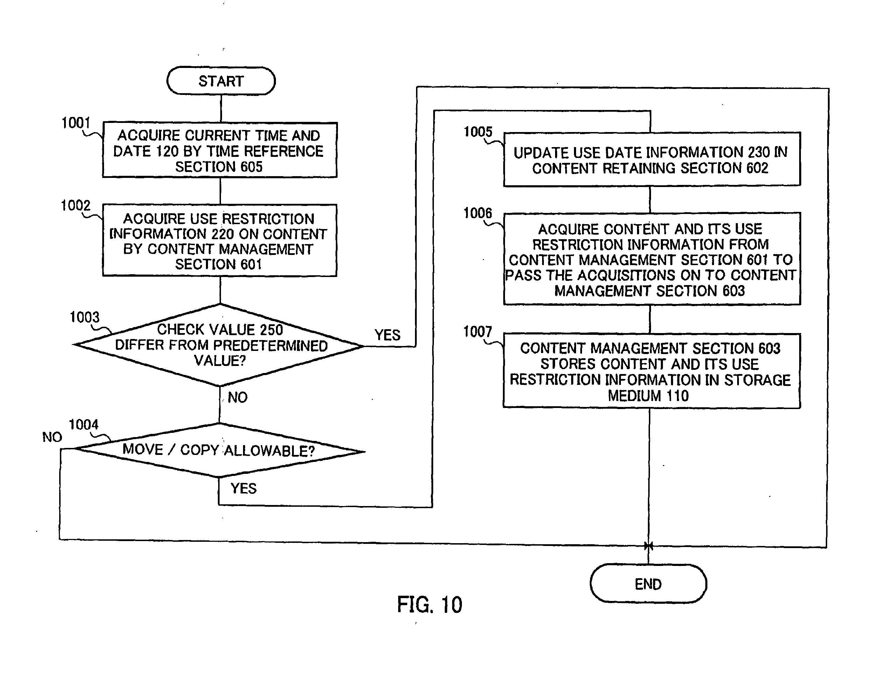

Next, with reference to FIG. 10, an explanation is given on the procedures of content copy processing according to the present embodiment. FIG. 10 is a flowchart illustrating the procedures of content copy processing from content retaining section 602 to storage medium 110 according to the present embodiment.

Step 1001: Current time and date 120 is acquired by time reference section 605.

Step 1002: Use restriction information 220 on content to be copied is acquired by first content management section 601.

Step 1003: Check value 250 of use restriction information 220 is checked. Copy processing is aborted in a case where check value 250 is different from the predetermined value.

Step 1004: Move / Copy approval / disapproval judgment section 607 judges whether content is allowable for copying or not. In a case where the copying of the content is judged as allowable, the processing goes to step 1005. If not, the copy processing is aborted.

Step 1005: Use date information updating section 606 updates use date information 230 on content in content retaining section 602.

Step 1006: First content management section 601 acquires content and its use restriction information to pass the acquisitions on to second content management section 603.

Step 1007: Second content management section 603 stores content and its use restriction information in storage medium 110.

The procedure of move / copy approval / disapproval judgment in step 1004 is the same procedure as illustrated in FIG. 9. In addition, the updating procedure of use date information in step 1005 is the same as that illustrated with the flowchart in FIG. 4 according to Embodiment 1.

Through the above procedures, it becomes possible to copy content and its use restriction information from content retaining section 602 to storage medium 110, and at the same time, to update use date information.

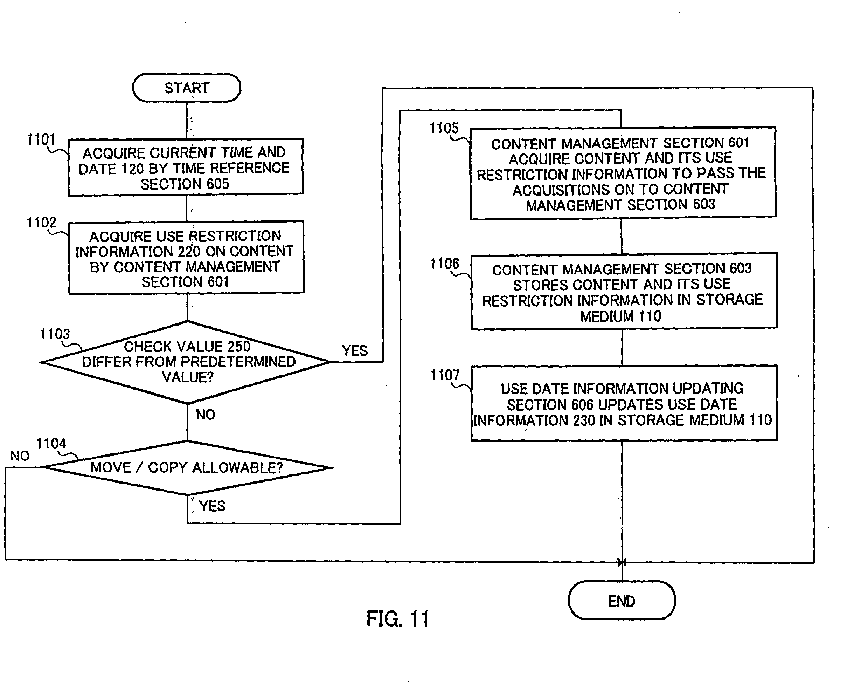

According to the copy procedures in FIG. 10, at the time of copying, both of use restriction information on content in content retaining section 602, which is a copy origin, and use restriction information on the content in storage medium 110, which is a copy target, are subjected to updating, however, it may be configured to update the use date information at the copy target only without updating the use date information at the copy origin. The copy processing procedures for such a configuration is explained below with reference to FIG. 11.

FIG. 11 is a flowchart illustrating the procedures of the second content copy processing from content retaining section 602 to storage medium 110 according to the present embodiment.

Step 1101 : Current time and date 120 is acquired by time reference section 605.

Step 1102: Use restriction information 220 on content to be copied is acquired by first content management section 601.

Step 1103: Check value 250 of use restriction information 220 is checked. Copy processing is aborted in a case where check value 250 is different from the predetermined value.

Step 1104: Move / Copy approval / disapproval judgment section 607 judges whether content is allowable for copying or not. In a case where the copying of the content is judged as allowable, the processing goes to step 1105. If not, the copy processing is aborted.

Step 1105: First content management section 601 acquires content and its use restriction information to pass the acquisitions on to second content management section 603.

Step 1106: Second content management section 603 stores content and its use restriction information in storage medium 110.

Step 1107: Use date information updating section 606 updates use date information 230 on content in storage medium 110.

The procedure of move / copy approval / disapproval judgment in step 1104 is the same procedure as illustrated in FIG. 9. In addition, the updating procedure of use date information in step 1107 is the same as that illustrated with the flowchart in FIG. 4 according to Embodiment 1.

Through the above procedures, it becomes possible to copy content and its use restriction information from content retaining section 602 to storage medium 110, and to update use date information on the content in the storage medium without updating use date information on the content in content retaining section 602.

It is noted that, herein, an explanation is given by showing an example case where content is copied after having judged whether the copying of the content is allowable or not, however, it may be configured in such a way that the content is copied without judging the approval / disapproval of the copying of the content. In such a configuration, step 1004 in FIG. 10, and step 1104 in FIG. 11 are not necessary.

Furthermore, though an explanation is given herein with an example case where content and its use restriction information is copied from content retaining section 602 to storage medium 110, the copying thereof from storage medium 110 to content retaining section 602 is also implementable in accordance with the same procedures.

### (Embodiment 3)

In Embodiment 3, an explanation is given on a configuration for preventing an act of unauthorized viewing of content which is done by tampering a clock in a content playback apparatus.

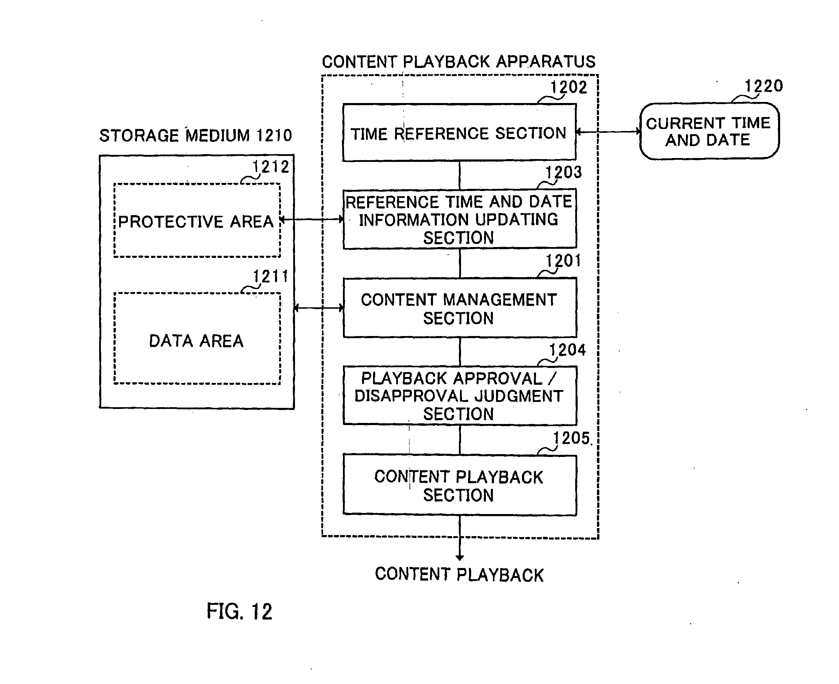

FIG. 12 is a configuration diagram illustrating a content playback apparatus according to Embodiment 3 of the present invention. This content playback apparatus comprises content management section 1201, time reference section 1202, playback approval / disapproval judgment section 1204, and content playback section 1205, which are the same as those according to Embodiment 1, and further comprises reference time and date information updating section 1203 that updates reference time and date information to be stored in storage medium 1210.

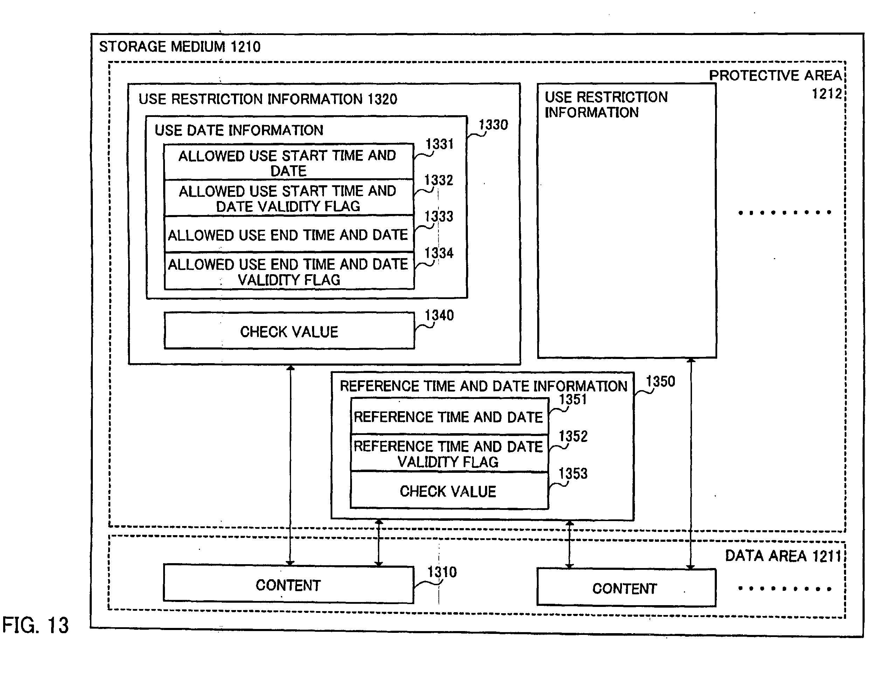

FIG. 13 is a configuration diagram illustrating the storage format of content and its use restriction information in storage medium 1210 of FIG. 12.

Content 1310 is stored in data area 1211, whereas its use restriction information 1320 is stored in protective area 1212 in association with content 1310. Content 1310 may be subjected to encryption.

Use restriction information 1320 contains use date information 1330 and check value 1340. Use restriction information 1320 may contain other use limitations such as, for example, maximum playback count of content, and so on. In addition, use restriction information 1320 as a whole may be subjected to encryption.

In addition, reference time and date information 1350, which is commonly referred to by a plurality of content, is stored in protective area 1212. Entire reference time and date information 1350 may be subjected to encryption.

Use date information 1330 is made up of allowed use start time and date 1331, allowed use start time and date validity flag 1332, allowed use end time and date 1333, and allowed use end time and date validity flag 1334. Descriptions of these are the same as those described in Embodiment 1.

Reference time and date information 1350 is information for storing the time and date of content downloading and the time and date of the last content playback, and this information contains reference time and date 1351, reference time and date validity flag 1352, and check value 1353. Reference time and date validity flag 1352 is a flag indicating the validity of reference time and date 1351, and the flag shows that reference time and date 1351 is not designated in a case where reference time and date validity flag 1352 is a value indicating invalid. In this embodiment, it is assumed to show that it is valid in a case where the value of a flag is "1", while it is invalid in a case where the value of the flag is "0." Such designation may also be implemented by designating a value indicating 0 in the reference time and date, and if done so, there is no necessity to provide reference time and date validity flag 1352. Incidentally, check value 1353 is a value for checking to make sure that entire reference time and date information 1350 has not been tampered. A predetermined value such as, for example, "1111" is predefined as a check value, which indicates that reference time and date information 1350 has been tampered if the check value is not the predetermined value. It is not necessary to provide check value 1353 in a case where there is no possibility of tampering, as in a case where reference time and date information 1350 is stored in protective area in an encrypted form.

FIG. 13 illustrates an example case where reference time and date information 1350 is referred to by a plurality of content. This is implementable with such a configuration that, for example, a plurality of content is stored in a directory which is created in data area 1211, and reference time and date information corresponding to the directory is stored in protective area 1212. It is noted that it may be configured in such a way that only one reference time and date information is provided in a storage medium to allow all content to refer to the information, or it may be configured in such a way that all content have reference time and date information individually.

Check value 1340 is a value for checking to make sure that entire use restriction information 1320 has not been tampered, and its use is the same as that of check value 1353. It is not necessary to provide check value 1340 in a case where there is no possibility of tampering, as in a case where use restriction information 1320 is stored in protective area in an encrypted form.

Reference time and date information updating section 1203 updates reference time and date information 1350 by using current time and date 1220.

By referring to use date information 1330 and reference time and date information 1350, playback approval / disapproval judgment section 1204 judges whether the content is allowable to be played back or not. In a case where it is judged by playback approval / disapproval judgment section 1204 as allowable to be played back, content 1310 is sent from content management section 1201 to content playback section 1205, and content playback is executed.

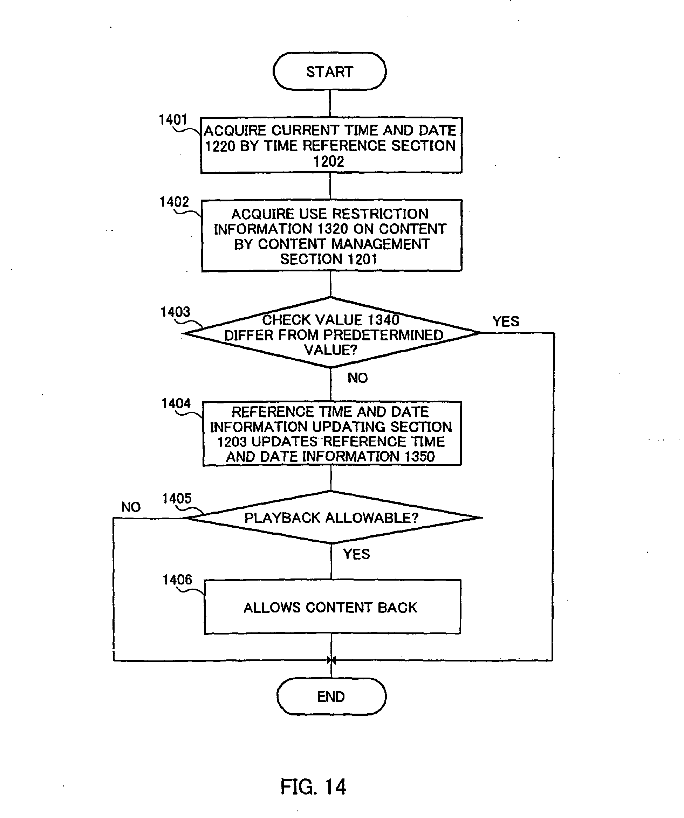

With reference to FIG. 14, an explanation is given on content playback processing according to the present embodiment. FIG. 14 is a flowchart illustrating the procedures of content playback processing according to the present embodiment.

Step 1401: Current time and date 1220 is acquired by time reference section 1202.

Step 1402: Use restriction information 1320 on content to be played back is acquired by content management section 1201.

Step 1403: Check value 1340 of use restriction information 1320 is checked. Playback processing is aborted in a case where check value 1340 is different from the predetermined value.

Step 1404: Reference time and date updating section 1203 updates reference time and date information 1350.

Step 1405: Playback approval / disapproval judgment section 1204 judges whether content is allowable for playback or not. In a case where the playback of the content is judged as allowable, the processing goes to step 1406. If not, the playback processing is aborted.

Step 1406: The content is acquired by content management section 1201.

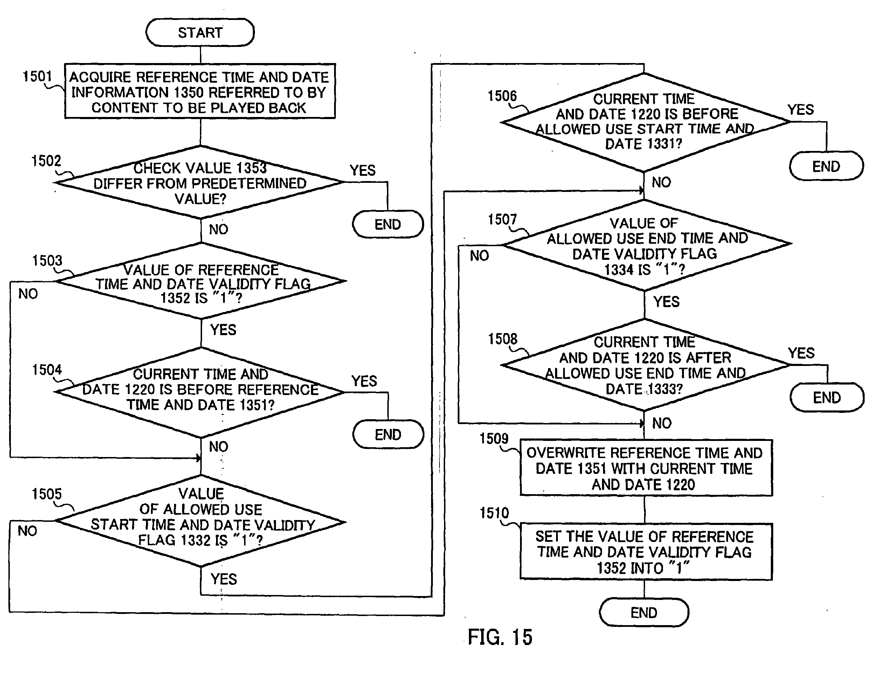

Next, the procedures for updating of reference time and date information 1350 by reference time and date updating section 1203 in step 1404 of FIG. 14 is described below with reference to FIG. 15. FIG. 15 is a flowchart illustrating the updating procedures of reference time and date information 1350.

Step 1501: Reference time and date information 1350 referred to by content to be played back is acquired by content management section 1201.

Step 1502: Check value 1353 of reference time and date information 1350 is checked. The processing for updating the reference time and date information is aborted in a case where check value 1353 is different from the predetermined value. If not, the processing goes to step 1503.

Step 1503: The value of reference time and date validity flag 1352 is checked. In a case where the value of reference time and date validity flag 1352 is "1", the processing goes to step 1504. If not, the processing goes to step 1505.

Step 1504: Current time and date 1220 is compared with reference time and date 1351. The processing for updating the reference time and date information is aborted in a case where current time and date 1220 is before reference time and date 1351. If not, the processing goes to step 1505.

Step 1505: Allowed use start time and date validity flag 1332 is checked. In a case where the value of allowed use start time and date validity flag 1332 is "1", the processing goes to step 1506. If not, the processing goes to step 1507.

Step 1506: Current time and date 1220 is compared with allowed use start time and date 1331. In a case where current time and date 1220 is a time and date before allowed use start time and date 1331, the updating processing of the reference time and date information is ended. If not, the processing goes to step 1507.

Step 1507: Allowed use end time and date validity flag 1334 is checked. In a case where the value of allowed use end time and date validity flag 1334 is "1", the processing goes to step 1508. If not, the processing goes to step 1509.

Step 1508: Current time and date 1220 is compared with allowed use end time and date 1333. In a case where current time and date 1220 is a time and date after allowed use end time and date 1333, the updating processing of the reference time and date information is ended. If not, the processing goes to step 1509.

Step 1509: Reference time and date 1351 is overwritten with current time and date 1220.

Step 1510: The value of reference time and date validity flag 1352 is set into "1."

Through the above steps, it is possible to update reference time and date information 1350 by using current time and date 1220.

It is noted that, herein, an explanation is given with an example case where reference time and date updating processing is carried out only in a case where current time and date 1220 is after allowed use start time and date 1331 but before allowed use end time and date 1333, however, it may be configured to update reference time and date 1341 always by using current time and date 1220 without taking into' account the relation between current time and date 1220 and allowed use start time and date 1331 as well as the relation between current time and date 1220 and allowed use end time and date 1333. In such a configuration, steps 1505 through 1508 in FIG. 15 are not necessary.

In addition, herein, an explanation is given with an example case where reference time and date 1351 is not subjected to rewriting in a case where current time and date 1220 is before reference time and date 1341, however, it may alternatively be configured so that reference time and date 1351 is always rewritten with current time and date 1220. In such a configuration, steps 1502 through 1504 in FIG. 15 are not necessary.

Furthermore, though an explanation is given herein on an example case where reference time and date 1351 is simply overwritten with current time and date 1220 in step 1509, reference time and date 1351 may alternatively be overwritten with a time and date which is given after an addition of a certain time (e.g. one minute) onto current time and date 1220 in step 1509. With such a configuration, it becomes possible to prevent unauthorized clock tampering such as one done in a case where reference time and date is kept at a constant time and date by adjusting current time and date into the same time of day as the reference time and date which has been stored.

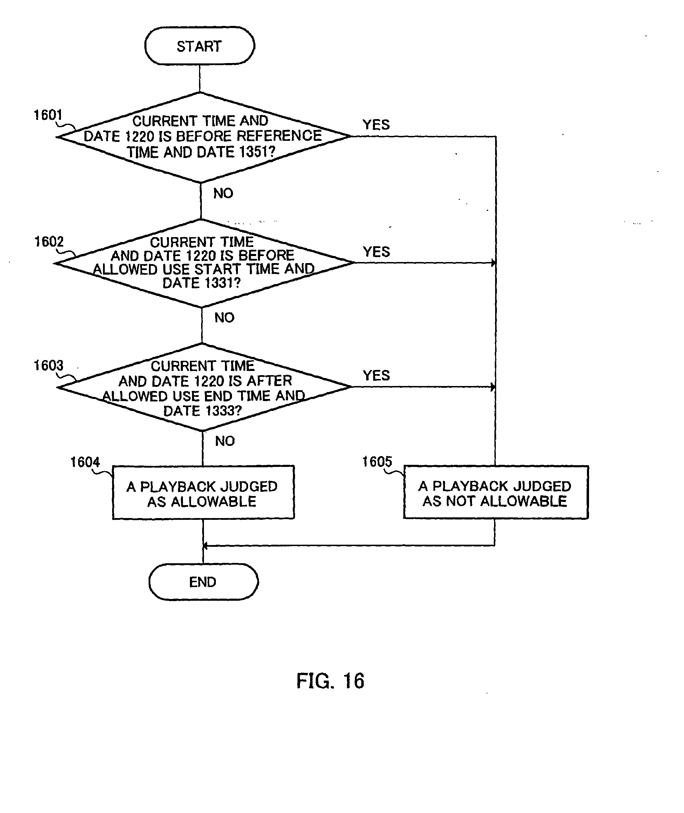

Next, the procedures of playback approval / disapproval judgment made by playback approval / disapproval judgment section 1204 in step 1405 of FIG. 14 is described below with reference to FIG. 16. FIG. 16 is a flowchart illustrating the procedures of playback approval / disapproval judgment in playback approval / disapproval judgment section 1204.

Step 1601: Reference time and date 1351 is compared with'current time and date 1220. In a case where current time and date 1220 is a time and date before reference time and date 1351, the processing goes to step 1605. If not, the processing goes to step 1602.

Step 1602: Allowed use start time and date 1331 is compared with current time and date 1220. In a case where current time and date 1220 is before allowed use start time and date 1331, the processing goes to step 1605. If not, the processing goes to step 1603.

Step 1603: Allowed use end time and date 1333 is compared with current time and date 1220. In a case where current time and date 1220 is after allowed use end time and date 1333, the processing goes to step 1605. If not, the processing goes to step 1604.

Step 1604: A judgment on playback is made as allowable.

Step 1605: A judgment on playback is made as not allowable.

Through the above procedures, it is possible to judge whether it is allowable or not to execute the playback of content which is subjected to checking of reference time and date and its use date. With such a configuration, it becomes possible to prevent an unauthorized playback of content which is done by tampering an internal clock of a content playback apparatus because the playback of the content becomes unallowable in a case where the internal clock of the content playback apparatus is set into a time and date before reference time and date.

It is noted that, herein, an explanation is given with an example case where check is made only as to whether current time and date 1220 is a time and date before reference time and date 1351 or not in step 1601, a concurrent check may be made in step 1601 as to whether current time and date 1220 is after a time and date which is given after an addition of a certain time and date (e.g. one year) onto reference time and date 1351. With such a configuration, it becomes possible not only to prevent an unauthorized viewing of content which is done by turning a clock back, but also to prevent an unauthorized viewing of the content which is done by setting the clock ahead deliberately.

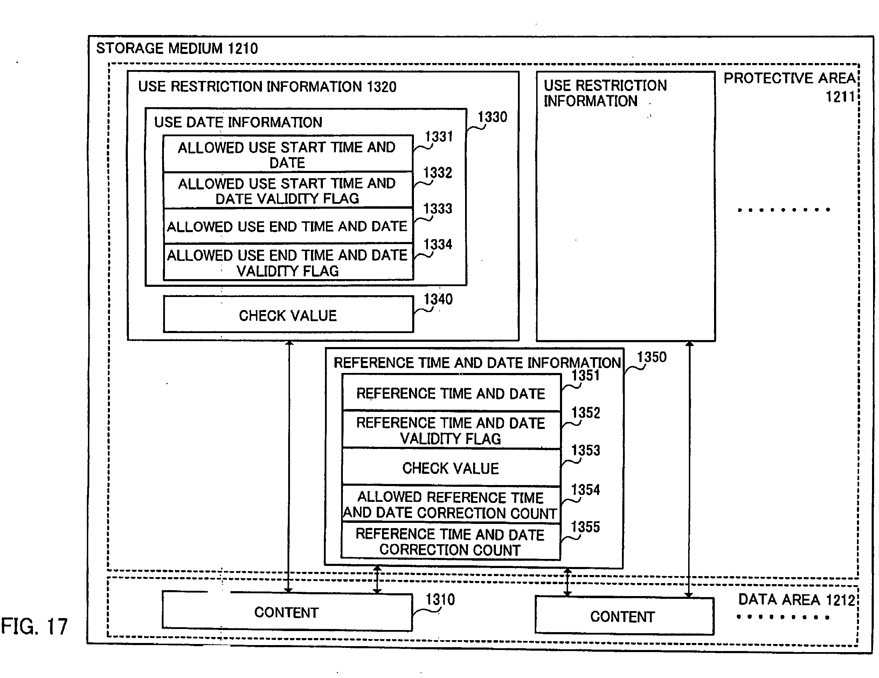

FIG. 17 is a configuration diagram illustrating the second storage format of content and its use restriction information in storage medium 1210 of FIG. 12.

In FIG. 17, reference time and date information 1350 further contains allowed reference time and date correction count 1354 and reference time and date correction count 1355. Allowed reference time and date correction count 1354 indicates the maximum number of times up to which reference time and date 1351 is allowed to be rewritten even in a case where reference time and date 1351 is a time and date after the current time and date, and as its initial value, the number of times of, for example, "5" is given. Reference time and date correction count 1355 records the number of times of occurrences of reference time and date corrections so far, and as its initial value, the value of, for example, "0" is given.

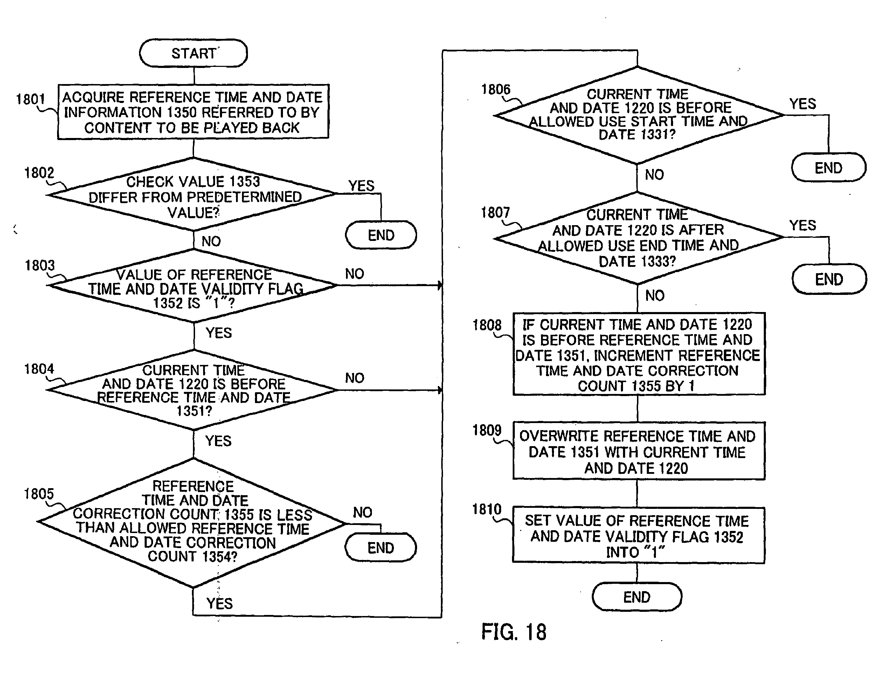

With reference to FIG. 18, an explanation is given below on the procedures of updating reference time and date in a case where the configuration of FIG. 17 is adopted. FIG. 18 is a flowchart illustrating the updating procedures of reference time and date information 1350 having the configuration of FIG. 17.

Step 1801: Reference time and date information 1350 referred to by content to be played back is acquired by content management section 1201.

Step 1802: Check value 1353 of reference time and date information 1350 is checked. The processing for updating the reference time and date information is aborted in a case where check value 1353 is different from the predetermined value. If not, the processing goes to step 1803.

Step 1803: The value of reference time and date validity flag 1352 is checked. In a case where the value of reference time and date validity flag 1352 is "1", the processing goes to step 1804. If not, the processing goes to step 1806.

Step 1804: Current time and date 1220 is compared with reference time and date 1351. In a case where current time and date 1220 is before reference time and date 1351, the processing goes to step 1805. If not, the processing goes to step 1806.

Step 1805: In a case where reference time and date correction count 1355 is less than allowed reference time and date correction count 1354, the processing goes to step 1806. Otherwise the updating processing of reference time and date information is ended.

Step 1806: Current time and date 1220 is compared with allowed use start time and date 1331. In a case where current time and date 1220 is a time and date before allowed use start time and date 1331, the updating processing of the reference time and date information is ended. If not, the processing goes to step 1807.

Step 1807: Current time and date 1220 is compared with allowed use end time and date 1333. In a case where current time and date 1220 is a time and date after allowed use end time and date 1333, the updating processing of the reference time and date information is ended. If not, the processing goes to step 1808.

Step 1808: In a case where current time and date 1220 is before reference time and date 1351, reference time and date correction count 1355 is incremented by 1.

Step 1809: Reference time and date 1351 is overwritten with current time and date 1220.

Step 1810: The value of reference time and date validity flag 1352 is set into "1."

Through the above steps, at the time of updating reference time and date information 1350 by using current time and date 1220, it becomes possible to overwrite the reference time and date information forcibly with the current time and date up to the number of times given by allowed reference time and date correction count 1354. This allows a user to correct the reference time and date up to the allowed number of times even in a situation where the reference time and date has been updated by the user's erroneous setting of a clock into future time of day, and therefore, it is ensured that user convenience is not sacrificed.

It is noted that, herein, an explanation is given with an example case where reference time and date updating processing is carried out only in a case where current time and date 1220 is after allowed use start time and date 1331 but before allowed use end time and date 1333, however, it may be configured to update reference time and date 1341 always by using current time and date 1220 without taking into account the relation between current time and date 1220 and allowed use start time and date 1331 as well as the relation between current time and date 1220 and allowed use end time and date 1333. In such a configuration, steps 1806 and 1807 in FIG. 15 are not necessary.

Furthermore, though an explanation is given herein on an example case where reference time and date 1351 is simply overwritten with current time and date 1220 in step 1808, reference time and date 1351 may alternatively be overwritten with a time and date which is given after an addition of a certain time (e.g. one minute) onto current time and date 1220 in step 1808. With such a configuration, it becomes possible to prevent unauthorized clock tampering such as one done in a case where reference time and date is kept at a constant time and date by adjusting current time and date into the same time of day as the reference time and date which has been stored.

It is noted that, in the present embodiment, it is assumed that the updating processing of reference time and date information 1350 is done at the time of playback of content, however, the updating processing of reference time and date information 1350 may be executed at any other point in time such as, for example, at the time of downloading the content.

In addition, in the present embodiment, though an explanation is given by showing an example case where use restriction information and reference time and date information on content is stored in protective area, the use restriction information and the reference time and date information may be stored in data area in a case where there is no possibility of tampering thereof, as in a case where the use restriction information and the reference time and date information has been subjected to encryption.

Furthermore, in the present embodiment, though an explanation is given by showing an example case where content, its use restriction information, and reference time and date information is stored in a storage medium, it may be configured in such a way that the content, its use restriction information, and the reference time and date information is stored in any internal storage area of a content playback apparatus (such as in a hard disc).

By configuring a content playback apparatus as described above, without a need to refer to an external clock such as a server's on network, it becomes possible to prevent an unauthorized viewing of content which is done by the tampering of time of day, and to execute the playback of the content in compliance with a use time limit restriction designated by a content distribution source.

### (Embodiment 4)

In Embodiment 4, an explanation is given on a case where reference time and date information is updated at the time of storing of content.

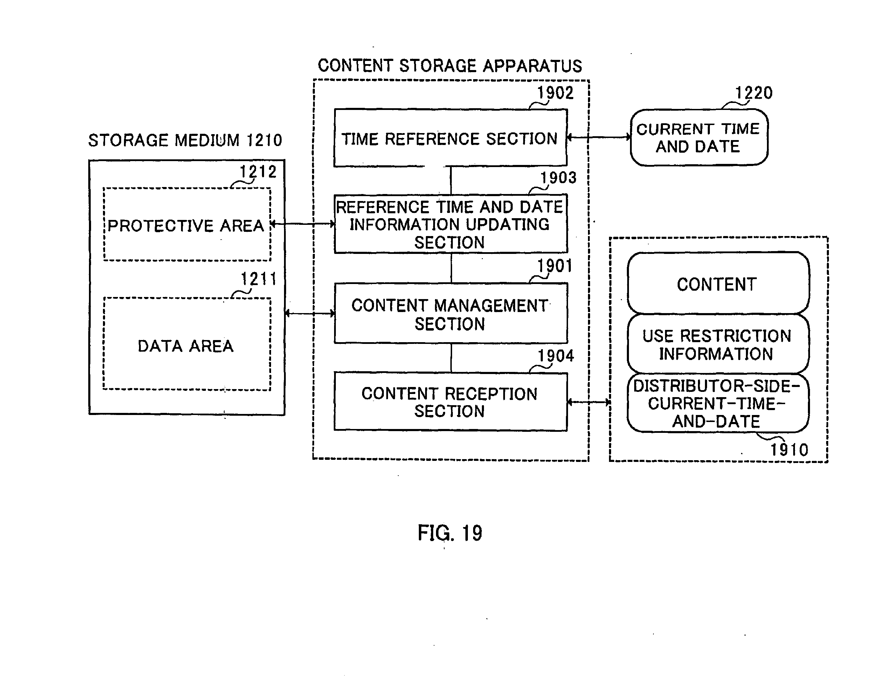

FIG. 19 is a configuration diagram illustrating a content storage apparatus according to Embodiment 4 of the present invention, where the apparatus stores content in storage medium 1210. This content storage apparatus comprises content management section 1901, time reference section 1902, reference time and date information updating section 1903, and further comprises content reception section 1904 that receives content via a network.

Time reference section 1902 acquires current time and date 1220. Time reference section 1902 is usually configured to acquire current time and date by referring to an internal clock held by the content storage apparatus, however, this section may be configured in such a way that it refers to any external clock alternatively, such as a GPS or a server connected via a network.

Content management section 1901 stores content in storage medium 1210 and manages it. The configuration of storage medium 1210 as well as content and its use restriction information stored in storage medium 1210 are equivalent to those illustrated in FIG. 13 according to Embodiment 3.

Content reception section 1904 receives content and its use restriction information from a content distribution server on a network, and passes it on to content management section 1901. In addition, content reception section 1904 receives distributor-side-current-time-and-date 1910 concurrently at the same time of receiving the content and its use restriction information.

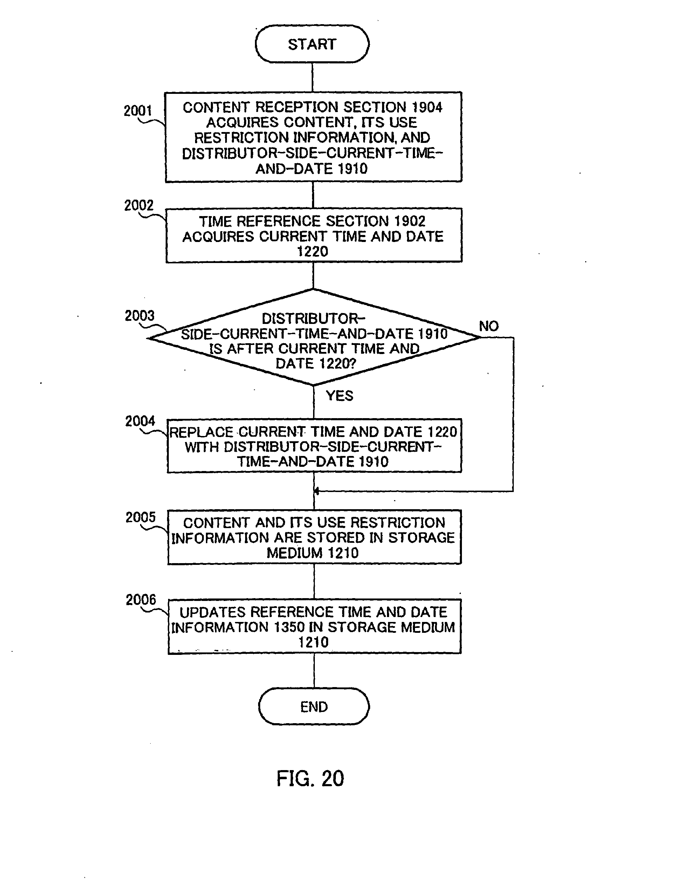

Next, with reference to FIG. 20, an explanation is given on the procedures of content storage processing in a content storage apparatus of FIG. 19. FIG. 20 is a flowchart illustrating the procedures of content storage processing in a content storage apparatus of FIG. 19.

Step 2001: Content reception section 1904 receives content, its use restriction information, and distributor-side-current-time-and-date 1910.

Step 2002: Time reference section 1902 acquires current time and date 1220.

Step 2003: Current time and date 1220 is compared with distributor-side-current-time-and-date 1910. In a case where distributor-side-current-time-and-date 1910 is a time and date after current time and date 1220, the processing goes to step 2004. If not, the processing goes to step 2005.

Step 2004: Current time and date 1220 is replaced with distributor-side-current-time-and-date 1910.

Step 2005: The content and its use restriction information are respectively stored as content 1310 and use restriction information 1320 in storage medium 1210.

Step 2006: Reference time and date information 1350 in storage medium 1210 is updated.

The updating procedure of reference time and date information 1350 in step 2006 is equivalent to the procedure illustrated in FIG. 15 according to Embodiment 3.

It is noted that, in content storage procedures illustrated in FIG. 20, an explanation is given with a configuration which is able to make correction in a case where current time and date 1220 is unreliable by comparing current time and date 1220 with distributor-side-current-time-and-date 1910, and by taking the later time and date of the compared two as current time and date 1220, however, step 2001, step 2003, and step 2004 may be omitted in a case where it is not possible to acquire distributor-side-current-time-and-date 1910 or in a case where current time and date 1220 acquired by time reference section 1902 is reliable enough.

By implementing content storage in accordance with procedures as described above, it is possible to update reference time and date information 1350 at the time of content storage.

It is noted that, in this embodiment, though the configuration of storage medium 1210 is explained as equivalent to that illustrated in FIG. 13, the configuration illustrated in FIG. 17 may be adopted. Even in such a configuration, the procedures of content storage are equivalent to those in the flowchart illustrated in FIG. 20. An exception is that the updating procedure of reference time and date information 1350 in step 2006 is equivalent to the procedure illustrated in FIG. 18 according to Embodiment 3.

In addition, in the present embodiment, though an explanation is given by showing an example case where use restriction information and reference time and date information on content is stored in protective area, the use restriction information and the reference time and date information may be stored in data area in a case where there is no possibility of tampering thereof, as in a case where the use restriction information and the reference time and date information has been subjected to encryption.

Furthermore, in the present embodiment, though an explanation is given by showing an example case where content, its use restriction information, and reference time and date information is stored in a storage medium, it may be configured in such a way that the content, its use restriction information, and the reference time and date information is stored in any internal storage area of a content playback apparatus (such as in a hard disc).

By presenting a content storage apparatus as described above, it becomes possible to store reference time and date information so that even a content playback apparatus which is not provided with a function for updating the reference time and date information is able to comply with content use time limit by using the reference time and date information.

### (Embodiment 5)

In Embodiment 5, a content management apparatus which manages the moving and copying of content by using reference time and date information is explained.

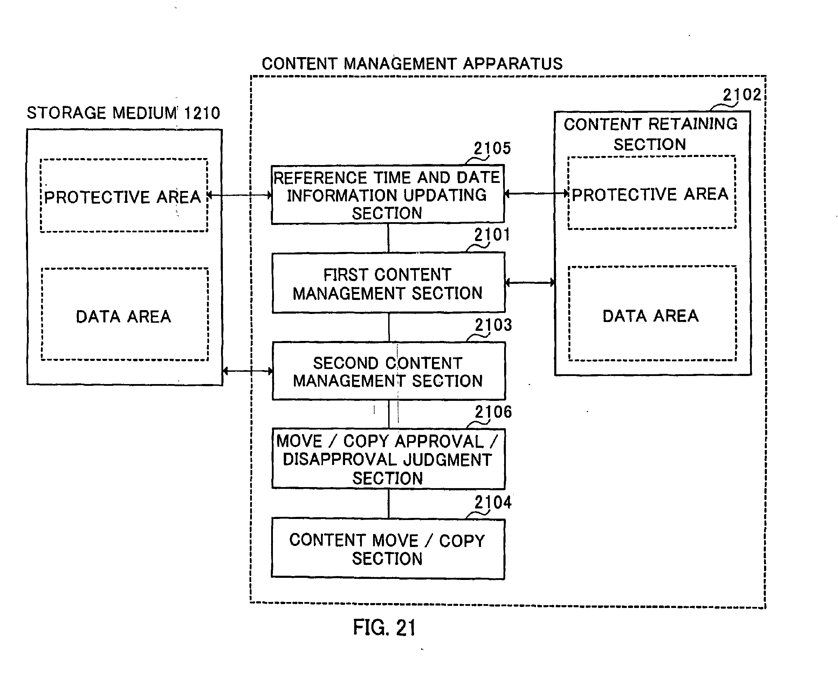

FIG. 21 is a configuration diagram illustrating a content management apparatus according to Embodiment 5 of the present invention. This content management apparatus comprises reference time and date information updating section 2105 in addition to first content management section 2101, content retaining section 2102, second content management section 2103, content move / copy section 2104, and move / copy approval / disapproval judgment section 2106.

First content management section 2101 manages content and its use restriction information retained by content retaining section 2102. Content retaining section 2102 is a storage medium such as a hard disc in a personal computer.

Second content management section 2103 manages content stored in storage medium 1210. Storage medium 1210 has the same configuration as that illustrated in FIG. 13 according to Embodiment 3.

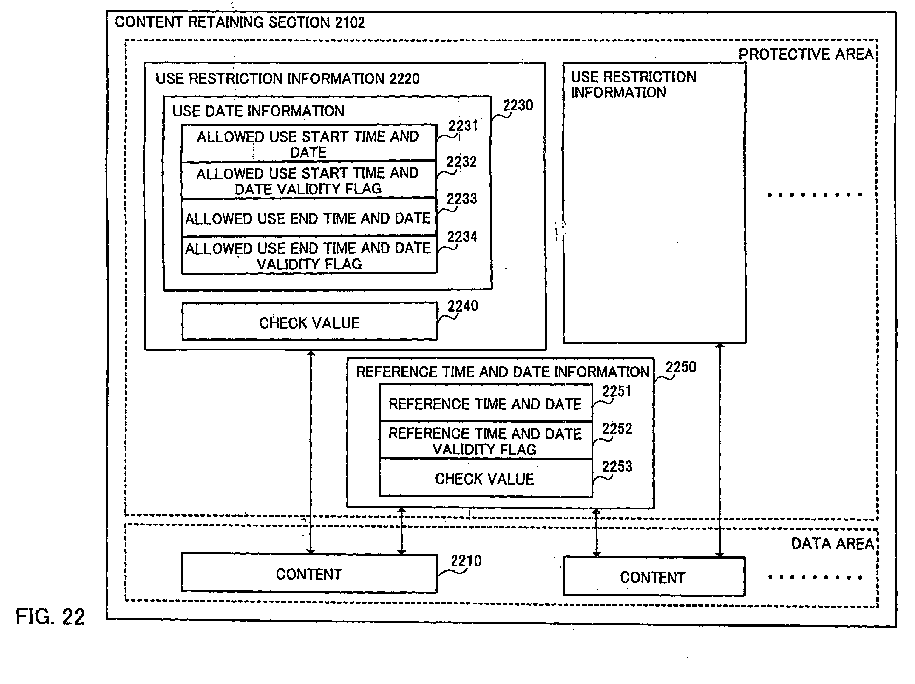

FIG. 22 is a configuration diagram illustrating the storage format of content and its use restriction information managed by content retaining section 2102. Content and its use restriction information are retained in the same format in storage medium 1210.

Content move / copy section 2104 copies or moves content and its use restriction information retained in content retaining section 2102 to storage medium 1210, or copies or moves content and its use restriction information retained in storage medium 1210 to content retaining section 2102.

Reference time and date information updating section 2105 is a section that updates reference time and date information retained at content retaining section 2102, and reference time and date information retained at storage medium 1210.

Move / Copy approval / disapproval judgment section 2106 judges whether content is allowable for copying or moving or not.

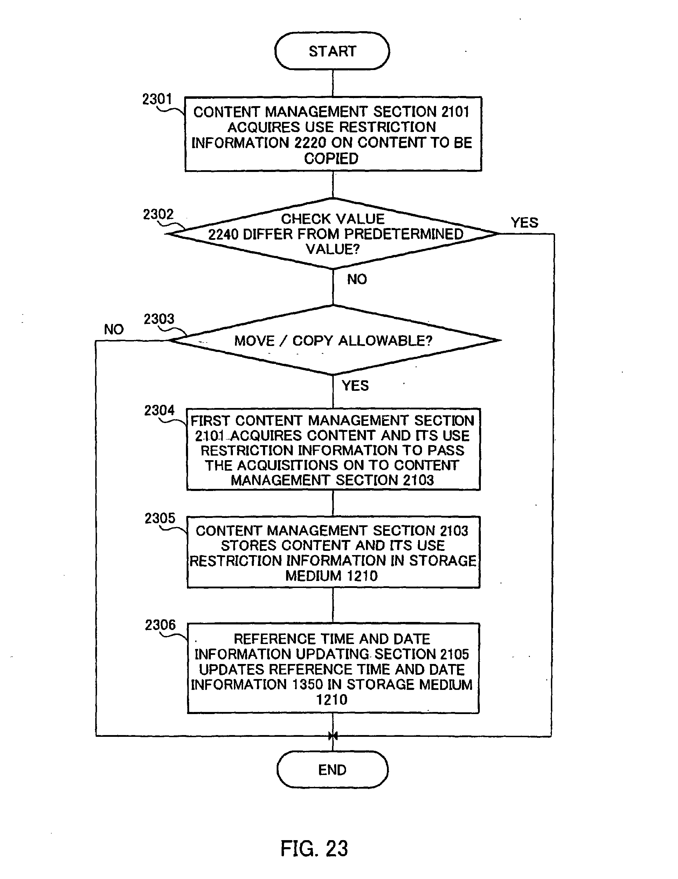

With reference to FIG. 23, an explanation is given on the procedures of content copy processing according to the present embodiment. FIG. 23 is a flowchart illustrating the procedures of content copy processing from content retaining section 2102 to storage medium 1210 according to the present embodiment.

Step 2301: Use restriction information 2220 on content to be copied is acquired by content management section 2101.

Step 2302: Check value 2240 of use restriction information 2220 is checked. Copy processing is aborted in a case where check value 2240 is different from the predetermined value. If not, the processing goes to step 2303.

Step 2303: Move / Copy approval / disapproval judgment section 2106 judges whether content is allowable for copying or not. In a case where the copying of the content is judged as allowable, the processing goes to step 2304. If not, the copy processing is aborted.

Step 2304: First content management section 2101 acquires content and its use restriction information out of content retaining section 2102 to pass the acquisitions on to second content management section 2103.

Step 2305: Second content management section 2103 stores content and its use restriction information in storage medium 1210.

Step 2306: Reference time and date information updating section 2105 updates reference time and date information 1350 in storage medium 1210.

It is noted that, herein, an explanation is given by showing an example case where content is copied after having judged whether the copying of the content is allowable or not, however, it may be configured in such a way that the content is copied without judging the approval / disapproval of the copying of the content. In such a configuration, step 2303 in FIG. 23 is may be omitted.

In addition, though the procedures of content copying are explained here, in a case of content moving, it is enough if first content management section 2101 deletes the content and its use restriction information retained at content retaining section 2102 after execution of step 2306.

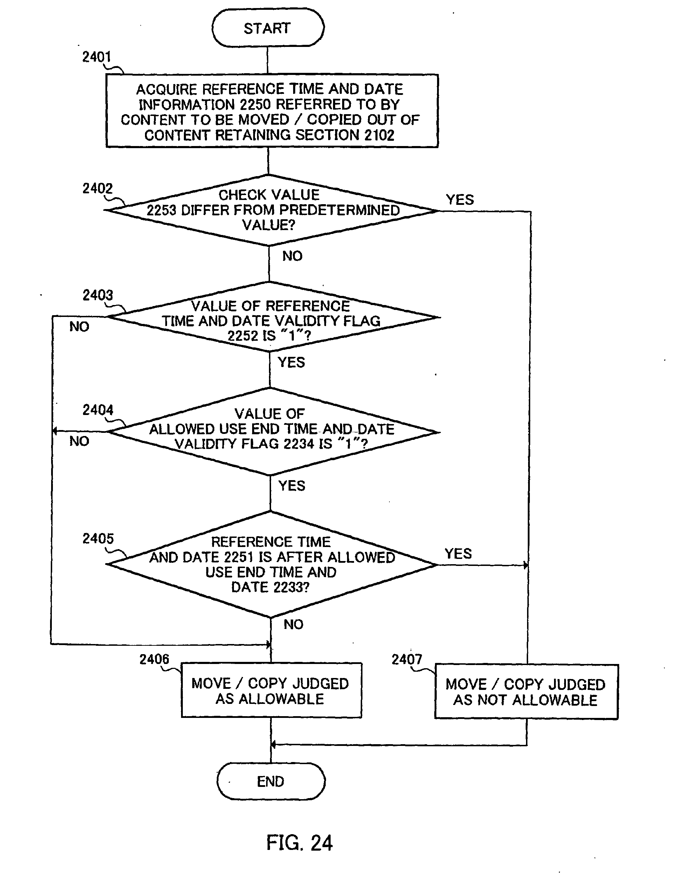

Next, the procedures for a move / copy approval / disapproval judgment which is made by move / copy approval / disapproval judgment section 2106 in step 2303 of FIG. 23 is described below with reference to FIG. 24. FIG. 24 is a flowchart illustrating the procedures for making a move / copy approval / disapproval judgment in move / copy approval / disapproval judgment section 2106.

Step 2401: Reference time and date information 2250 referred to by content in content retaining section 2102 which is to be moved / copied is acquired.

Step 2402: Check value 2253 of reference time and date information 2250 is checked. In a case where check value 2253 is different from the predetermined value, the processing goes to step 2407. If not, the processing goes to step 2403.

Step 2403: The value of reference time and date validity flag 2252 is checked. In a case where the value of reference time and date validity flag 2252 is "1", the processing goes to step 2404. If not, the processing goes to step 2406.

Step 2404: Allowed use end time and date validity flag 2234 is checked. In a case where the value of allowed use end time and date validity flag 2234 is "1", the processing goes to step 2405. If not, the processing goes to step 2406.

Step 2405: Reference time and date 2251 is compared with allowed use end time and date 2233. In a case where reference time and date 2251 is after allowed use end time and date 2233, the processing goes to step 2407. If not, the processing goes to step 2406.

Step 2406: A judgment on moving / copying is made as allowable.

Step 2407: A judgment on moving / copying is made as not allowable.

Through the above procedures, while taking reference time and date information into consideration, it becomes possible not to allow content to be moved or copied without referring to current time and date in a case where reference time and date 2251 is a time and date after allowed use end time and date 2233, in other words, in a case where the content is one whose time-limited use has expired. It is noted that, herein, though a check is done as to whether the moving / copying is allowed or not by means of a use time limit only, an additional step such as, for example, a check by means of vacant capacity of a storage medium may be provided.

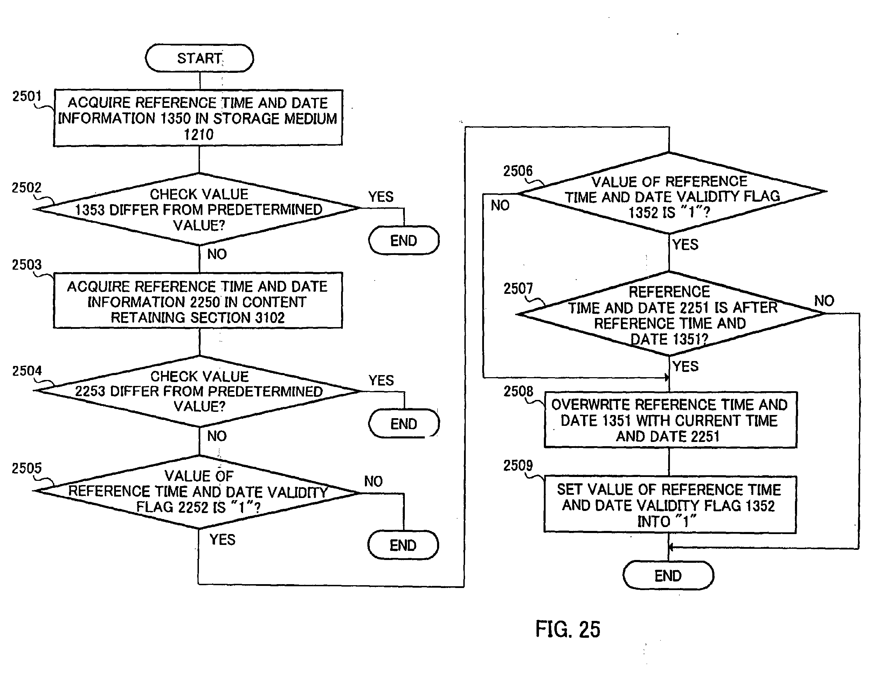

Next, the procedures for updating reference time and date information by reference time and date information updating section 2105 in step 2306 of FIG. 23 is described below with reference to FIG. 25. FIG. 25 is a flowchart illustrating the procedures of updating reference time and date in reference time and date information updating section 2105.

Step 2501: Reference time and date information 1350 in storage medium 1210 is acquired by second content management section 2203.

Step 2502: Check value 1353 of reference time and date information 1350 is checked. The processing for updating the reference time and date information is aborted in a case where check value 1353 is different from the predetermined value. If not, the processing goes to step 2503.

Step 2503: Reference time and date information 2250 retained at content retaining section 2102 is acquired by first content management section 2101.

Step 2504: Check value 2253 of reference time and date information 2250 is checked. The processing for updating the reference time and date information is aborted in a case where check value 2253 is different from the predetermined value. If not, the processing goes to step 2505.

Step 2505: Reference time and date validity flag 2252 is checked. In a case where the value of reference time and date validity flag 2252 is "1", the processing goes to step 2506. Otherwise the updating processing of reference time and date information is ended.

Step 2506: Reference time and date validity flag 1352 is checked. In a case where the value of reference time and date validity flag 1352 is "1", the processing goes to step 2507. If not, the processing goes to step 2508.

Step 2507: Reference time and date 2251 is compared with reference time and date 1351. In a case where current time and date 2251 is a time and date after reference time and date 1351, the processing goes to step 2508. Otherwise the updating processing of reference time and date information is ended.

Step 2508: Reference time and date 1351 is overwritten with reference time and date 2251.

Step 2509: The value of reference time and date validity flag 1352 is set into "1."

Through the above procedures, when moving or copying content, it becomes possible to store the later time and date, that is, reference time and date 2253 retained at content retaining section 2102 or reference time and date 1353 retained at storage medium 1210, as reference time and date of storage medium 1210.

It is noted that, it may be configured so that reference time and date 2251 is overwritten with reference time and date 1351 in a case where reference time and date 2251 is judged as a time and date before reference time and date 1351 in step 2507.

In addition, provided that a content management apparatus according to the present embodiment is provided with means for referring to current time and date, it may be configured so that, in step 2508, reference time and date 1352 of storage medium 1210 is overwritten by the later time and date of current time and date and reference time and date 2251.

With a content management apparatus configured as described above, it becomes possible to move content and its use time limit information from content retaining section 2102 to storage medium 1210, and at the same time, to update reference time and date information in storage medium 1210. Because this allows the reference time and date information to be updated into the latest state, it is possible to prevent an unauthorized act of circumventing content viewing restrictions based on reference time and date by moving or copying content.

It is noted that, herein, though an explanation is given with an example case where content and its use restriction information is copied or moved from content retaining section 2102 to storage medium 1210, the copying or moving thereof from storage medium 1210 to content retaining section 2102 is also implementable in accordance with the same procedures.

### (Embodiment 6)

In Embodiment 6, an apparatus for correcting reference time and date is explained.

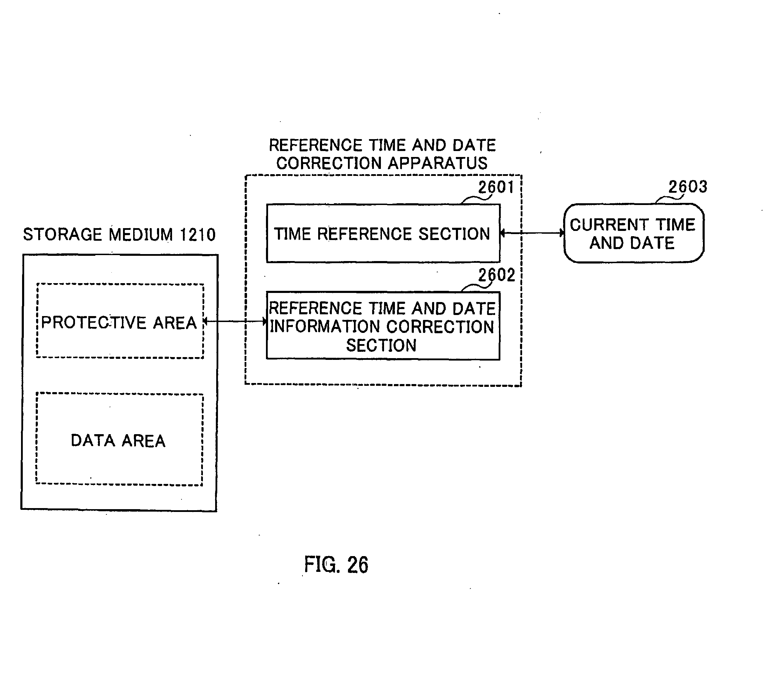

FIG. 26 is a configuration diagram illustrating a reference time and date correction apparatus according to Embodiment 6 of the present invention. This apparatus comprises time reference section 2601 and reference time and date correction section 2602.

Time reference section 2601 provides a means for acquiring precise current time and date 2603, and this section is usually configured to acquire current time and date from a GPS, a reliable server on a network, etc.; not withstanding the foregoing, it may be configured so that time reference section 2601 acquires current time and date by referring to an internal clock held by a reference time and date correction apparatus, provided that the internal clock is set into accurate time and date at its initial state, and that the apparatus is configured to make it impossible for a user to do the tampering thereof.

Reference time and date correction section 2602 is a section that updates reference time and date information stored in storage medium 1210. Storage medium 1210 has a configuration equivalent to that illustrated in FIG. 13 according to Embodiment 3, and content 1310, its use restriction information 1320, and reference time and date information 1350 is stored therein.

Reference time and date correction section 2602 overwrites reference time and date 1351 of reference time and date information 1350 in storage medium 1210 with accurate current time and date 2603 which is acquired by time reference section 2601. At the same time, reference time and date correction section 2602 sets the value of reference time and date validity flag 1352 into "1" while setting the value of check value 1353 into the predetermined value.

With a configuration of a reference time and date correction apparatus as described above, even in a situation where a user makes the erroneous time-of-daysettingsofacontentplaybackapparatus or a content storage apparatus, and accordingly, where content playback is disallowed because of the wrong time and date setting of reference time and date information 1350 in storage medium 1210, it is possible to forcibly correct reference time and date information 1350 in storage medium 1210.

It is noted that, a reference time correction apparatus according to the present embodiment may be incorporated as one function of a content playback apparatus according to Embodiment 3, a content storage apparatus according to Embodiment 4, and a content management apparatus according to Embodiment 5.

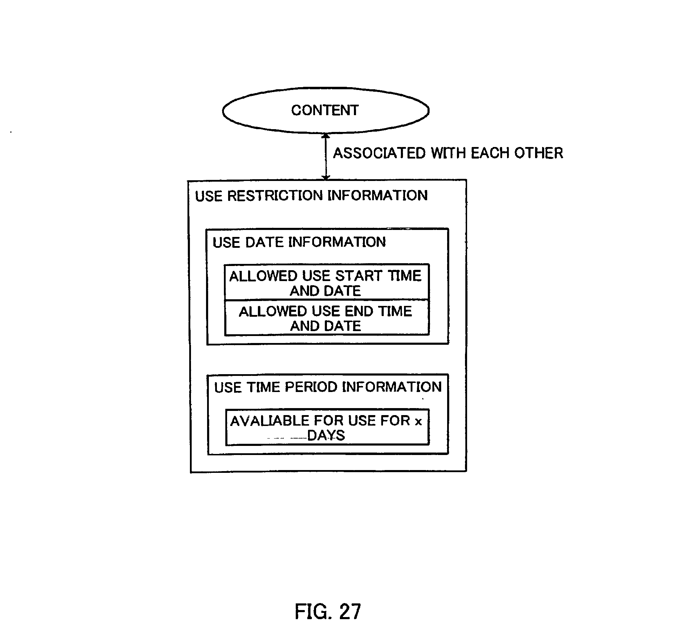

As described in each embodiment above, the content management method according to the present invention is, as illustrated in FIG. 27, a content management method that manages content and use restriction information indicating the terms of use for a user thereof in association with each other, where the use restriction information contains allowed use start time and date information indicating allowed use start time and date of the content, and/or allowed use end time and date information indicating allowed use end time and date of the content, and use time period information designating the length of a time period for allowable use of the content. According to this method, it is possible to set a use time limit on content flexibly.

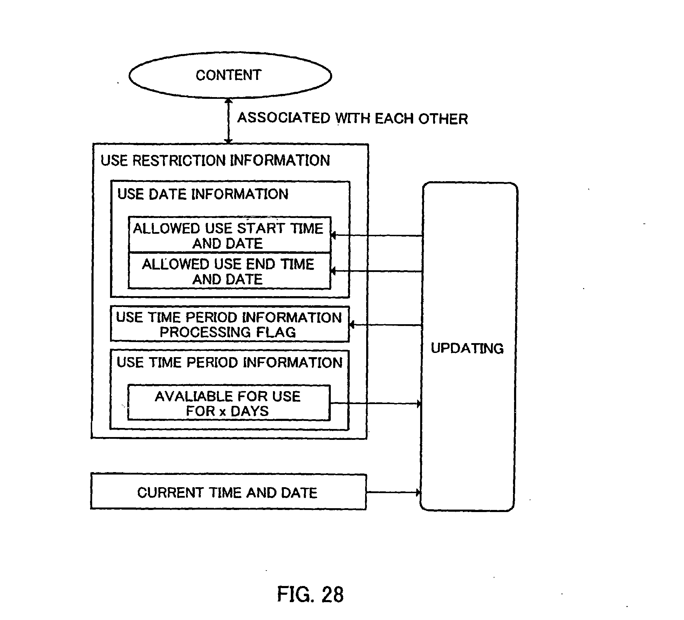

In addition, the content management method of the present invention is, as illustrated in FIG. 28, devised so that the allowed use start time and date information and the allowed use end time and date information is updated based on a calculation result which is figured out of the use time period information in accordance with a predetermined manner in the above method. According to this method, it is possible to determine a use time limit by referring only to allowed use start time and date information and allowed use end time and date information.

In addition, the content management method of the present invention is, as illustrated in FIG. 28, devised so that the use time period information further contains a use time period processing flag, where the value of the use time period processing flag is updated after the updating of the allowed use start time and date information and the allowed use end time and date information in the above method. According to this method, it is possible to confirm by means of a use time period processing flag whether allowed use start time and date information and allowed use end time and date information has been updated by means of use time period information or not.

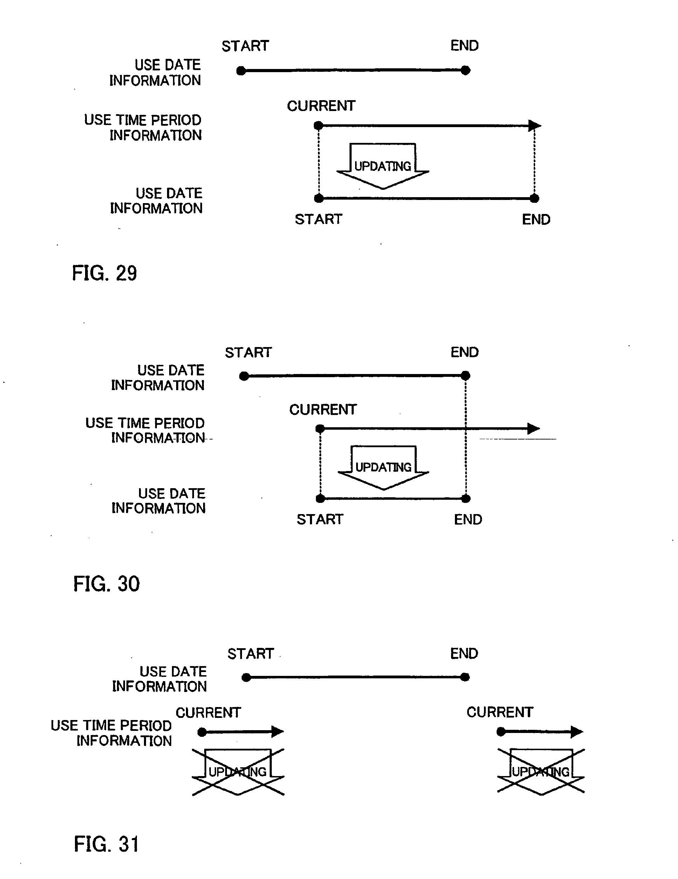

In addition, the content management method of the present invention is, as illustrated in FIG. 29, devised so that, in the updating of the allowed use start time and date information and the allowed use end time and date information, a rewriting is done with current time and date as allowed use start time and date, whereas a rewriting is done with a time and date which is given after an addition of the use time period information onto the current time and date as allowed use end time and date in the above method.

In addition, the content management method according to the present invention is, as illustrated in FIG. 30, a content management method that manages content and use restriction information in association with each other, the use restriction information indicating the terms of use for a user thereof, where the use restriction information contains allowed use start time and date information indicating allowed use start time and date of the content, and/or allowed use end time and date information indicating allowed use end time and date of the content, and use time period information designating the length of a time period for allowable use of the content, and in such a method, in the updating of the allowed use start time and date information and the allowed use end time and date informati,on, a rewriting is done with current time and date as the allowed use start time and date, whereas a rewriting is done with a time and date which is given after an addition of the use time period information onto the current time and date as the allowed use end time and date only in a case where the time and date given after the addition of the use time period information onto the current time and date is a time and date before the allowed use end time and date.

In addition, the content management method according to the present invention is, as illustrated in FIG. 31, a content management method that manages content and use restriction information in association with each other, the use restriction information indicating the terms of use for a user thereof, where the use restriction information contains allowed use start time and date information indicating allowed use start time and date of the content, and/or allowed use end time and date information indicating allowed use end time and date of the content, and use time period information designating the length of a time period for allowable use of the content, and in such a method, the allowed use start time and date information and the allowed use end time and date information is updated based on a calculation result which is figured out of the use time period information in accordance with a predetermined manner, where the updating is done only in a case where current time and date is after allowed use start time and date designated by the use date information but before allowed use end time and date designated by the use date information. According to this method, it is possible to interpret use date appropriately by preventing the rewriting of date with a time and date not within the use date.

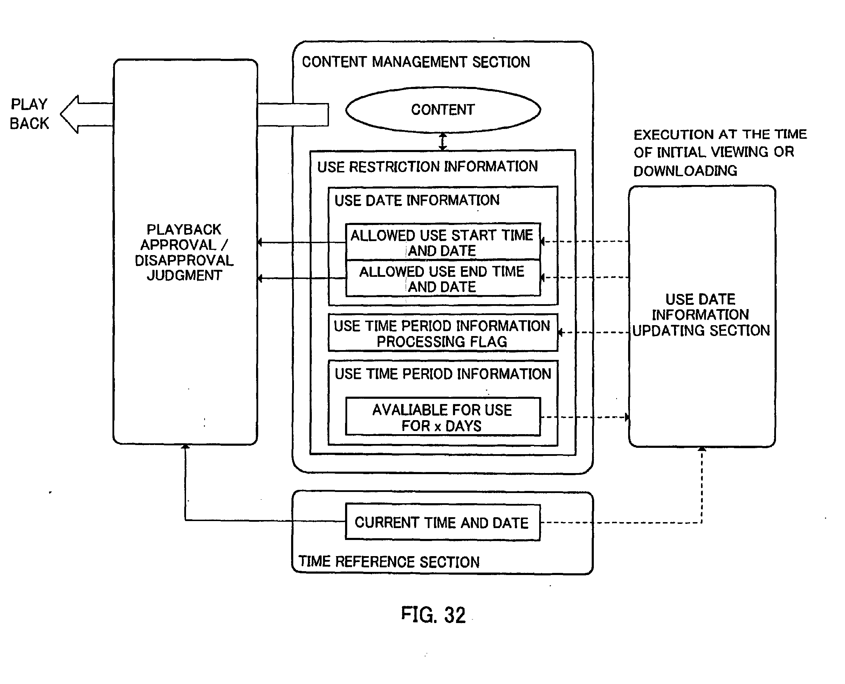

In addition, as illustrated in FIG. 32, the content playback apparatus according to the present invention is a content playback apparatus that plays content back in addition to managing the content and use restriction information, which indicates the terms of use for a user thereof, in association with each other, where the use restriction information contains allowed use start time and date information indicating allowed use start time and date of the content, and/or allowed use end time and date information indicating allowed use end time and date of the content, and use time period information designating the length of a time period for allowable use of the content, where the content playback apparatus adopts a configuration which comprises a judgment section that judges whether the playback of the content is allowable or not by comparing current time and date, the allowed use start time and date information and the allowed use end time and date information, and the use time period information. According to this configuration, it is possible to realize content viewing in compliance with a use time limit.

In addition, as illustrated in FIG. 32, the content playback apparatus according to the present invention is a content playback apparatus that plays content back in addition to managing the content and use restriction information, which indicates the terms of use for a user thereof, in association with each other, where the use restriction information contains allowed use start time and date information indicating allowed use start time and date of the content, and/or allowed use end time and date information indicating allowed use end time and date of the content, and use time period information designating the length of a time period for allowable use of the content, where the content playback apparatus adopts a configuration which comprises an updating section that updates the allowed use start time and date information and the allowed use end time and date information, and a judgment section that judges whether the playback of the content is allowable or not by comparing current time and date, the updated allowed use start time and date information and the updated allowed use end time and date information after the updating of the allowed use start time and date information and the allowed use end time and date information by the updating section. According to this configuration, once after interpreting use time period information to update allowed use start time and date information and allowed use end time and date information, it is possible to determine a use time limit by referring only to the allowed use start time and date information and the allowed use end time and date information.

Under the above-described configuration, as illustrated in FIG. 32, the content playback apparatus according to the present invention adopts a configuration where the updating of the use date information is done only in a case where the playback of the content is allowable.

As illustrated in FIG. 32, the content playback apparatus according to the present invention is a content playback apparatus that plays content back in addition to managing the content and use restriction information, which indicates the terms of use for a user thereof, in association with each other, where the use restriction information contains allowed use start time and date information indicating allowed use start time and date of the content, and/or allowed use end time and date information indicating allowed use end time and date of the content, and use time period information designating the length of a time period for allowable use of the content, and in addition to that, the use time period information contains a use time period processing flag, where the content playback apparatus adopts a configuration which comprises an updating section that updates the allowed use start time and date information and the allowed use end time and date information and further updates the use time period processing flag in accordance with the execution of the updating thereof, but does not update the allowed use start time and date information and the allowed use end time and date information in a case where the use time period processing flag has been updated, and a judgment section that judges whether the playback of the content is allowable or not by comparing current time and date, the allowed use start time and date information, and the allowed use end time and date information.

Under the above-described configuration, as illustrated in FIG. 32, the content playback apparatus according to the present invention adopts a configuration where the updating of the allowed use start time and date information and the allowed use end time and date information is done at the time of the downloading of the content.

Under the above-described configuration, as illustrated in FIG. 32, the content playback apparatus according to the present invention adopts a configuration where content and its use restriction information is stored and managed in a storage medium by the content management section.

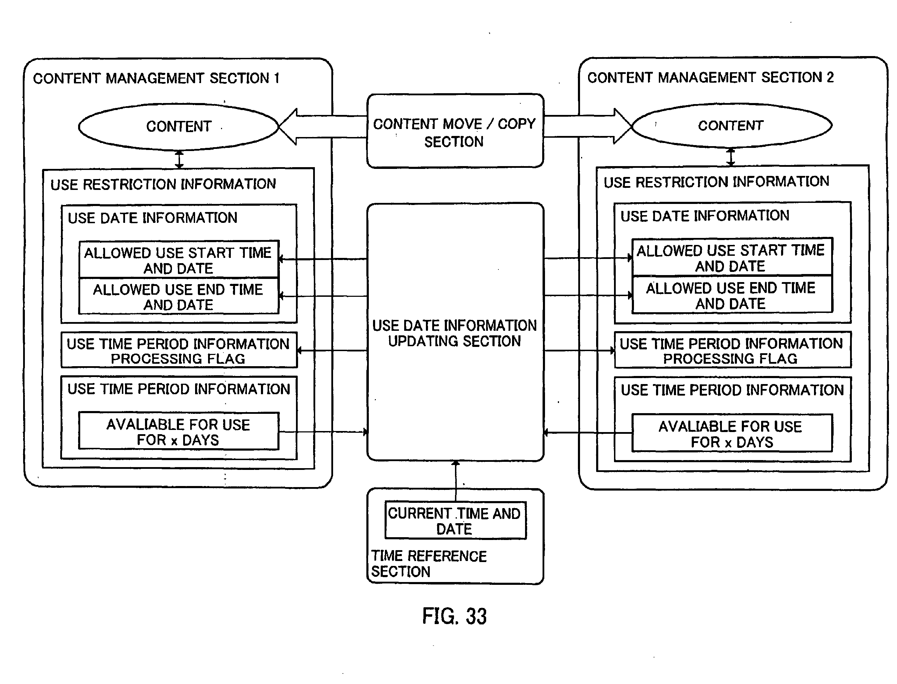

As illustrated in FIG. 33, the content management apparatus according to the present invention adopts a configuration which comprises the first contentmanagement section that implements a content management method claimed in any of claims 1, 7, or 14 and manages content and its use restriction information which is retained internally, and the second content management section that implements a content management method claimed in any of claims 1, 7, or 14 and manages content and its use restriction information which is stored in a storage medium, where the content and its use restriction information is moved or copied between the first content management section and the second content management section. According to this configuration, it is possible to copy or move content with use restriction information attached thereto between an apparatus and a storage medium.

As illustrated in FIG. 33, the content management apparatus according to the present invention adopts a configuration which comprises the first content management section that implements a content management method claimed in claim 2 and manages content and its use restriction information which is retained internally, the second content management section that implements a content management method claimed in claim 2 and manages content and its use restriction information which is stored in a storage medium, a content move / copy section that moves or copies content and its use restriction information between the first content management section and the second content management section, and a use date information updating section that updates the allowed use start time and date information and the allowed use end time and date information, where the use date information updating section updates the allowed use start time and date information and the allowed use end time and date information. According to this configuration, by interpreting use time period information to update allowed use start time and date information and allowed use end time and date information at a content management apparatus beforehand, it is possible to determine a use time limit by referring only to the allowed use start time and date information and the allowed use end time and date information.

Under the above-described configuration, as illustrated in FIG. 33, the content management apparatus according to the present invention adopts a configuration where the updating of the allowed use start time and date information and the allowed use end time and date information is done at the time of the moving or copying of the content.

Under the above-described configuration, as illustrated in FIG. 33, the content management apparatus according to the present invention adopts a configuration where, at the time of content copying, allowed use start time and date information and allowed use end time and date information in use restriction information on content at a copy origin is not subjected to updating, whereas allowed use start time and date information and allowed use end time and date information in use restriction information on content at a copy target only is subjected to updating. According to this configuration, at the time of copying content into a plurality of storage media, it is possible to update allowed use start time and date information and allowed use end time and date information individually for the plurality of storage media.

Under the above-described configuration, as illustrated in FIG. 33, the content management apparatus according to the present invention adopts a configuration where, at the time of content copying, both of allowed use start time and date information and allowed use end time and date information in use restriction information on content at a copy origin and allowed use start time and date information and allowed use end time and date information in use restriction information on content at a copy target are subjected to updating. According to this configuration, at the time of copying content into a plurality of storage media, it is possible to set the same allowed use start time and date information and allowed use end time and date information for the plurality of storage media.

Under the above-described configuration, as illustrated in FIG. 33, the content management apparatus according to the present invention adopts a configuration where the moving or copying of the content is executed only in a case where current time and date is after the allowed use start time and date, or where the current time and date is before the allowed use end time and date, or in such a case where both of the above conditions are met . According to this configuration, it is possible to impose a limit not only on the playback of content but also the moving or copying thereof with allowed use start time and date information and allowed use end time and date information.

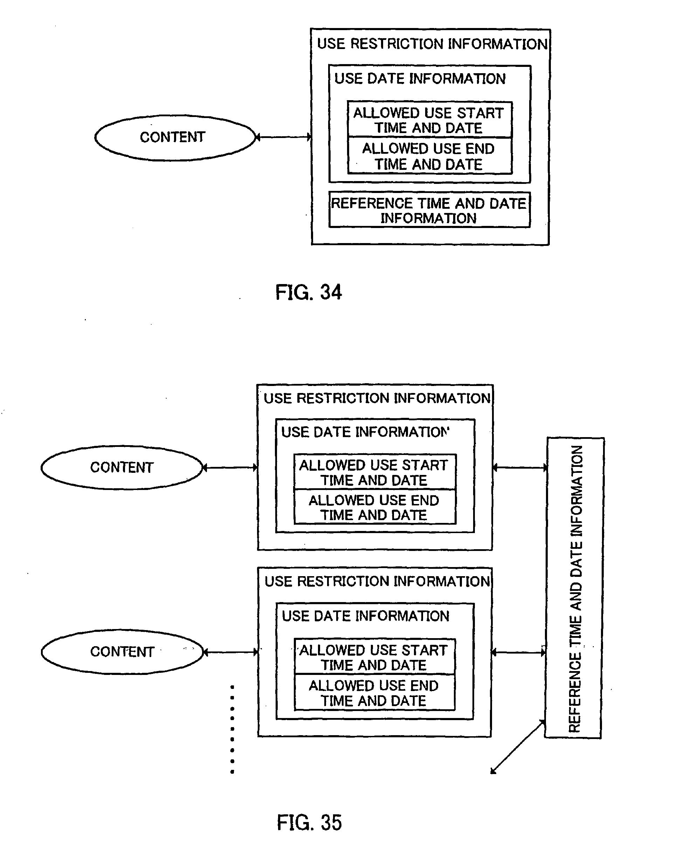

The content management method according to the present invention is, as illustrated in FIG. 34, a content management method that manages content and its use restriction information in association with each other, where the use restriction information contains allowed use start time and date information and/or allowed use end time and date information, and reference time and date information. According to this method, it is possible to prevent an unauthorized viewing of content which may be done by the tampering of a clock in an apparatus.

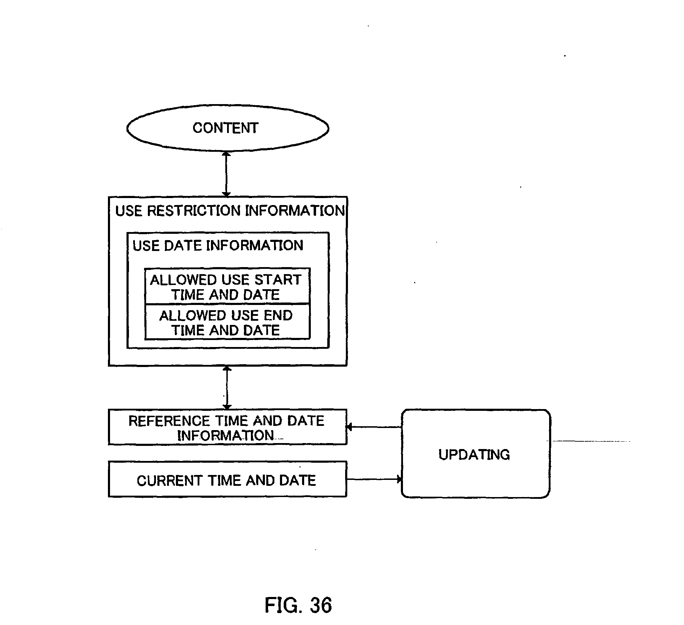

Under the above-described method, as illustrated in FIG. 36, the content management method according to the present invention is devised so that the reference time and date information is updated with current time and date.

Under the above-described method, as illustrated in FIG. 36, the content management method according to the present invention is devised so that the reference time and date information is updated with a time and date which is given after an addition of a certain predetermined time onto current time and date. According to this method, it is possible to prevent the unauthorized tampering of a clock such as one done in a case where reference time and date information is made practically invalid by adjusting current time and date into the same time of day as the reference time and date which has been stored.

Under the above-described method, as illustrated in FIG. 36, the content management method according to the present invention is devised so that the updating of the reference time and date information is executed only in a case where current time and date is a time and date after the reference time and date. According to this method, it is possible to prevent the unauthorized tampering of a clock such as one done in a case where reference time and date information is made practically invalid by updating the reference time and date on current time and date before the reference time and date.

The content management method according to the present invention_is, as illustrated in FIG. 35, a content management method that manages content and its use restriction information in association with each other, where the use restriction information contains allowed use start time and date information and/or allowed use end time and date information, and the method manages reference time and date information which is commonly referred to by a plurality of content. According to this method, it is possible to prevent an unauthorized viewing of content such as one done by the tampering of a clock for each of content.

Under the above-described method, as illustrated in FIG. 36, the content management method according to the present invention is devised so that the reference time and date information is updated with current time and date.

Under the above-described method, as illustrated in FIG. 36, the content management method according to the present invention is devised so that the reference time and date information is updated with a time and date which is given after an addition of a certain predetermined time onto current time and date. According to this method, it is possible to prevent the unauthorized tampering of a clock such as one done in a case where reference time and date information is made practically invalid by adjusting current time and date into the same time of day as the reference time and date which has been stored.

Under the above-described method, as illustrated in FIG. 36, the content management method according to the present invention is devised so that the updating of the reference time and date information is executed only in a case where current time and date is a time and date after the reference time and date. According to this method, it is possible to prevent the unauthorized tampering of a clock such as one done in a case where reference time and date information is made practically invalid by updating the reference time and date on current time and date before the reference time and date.

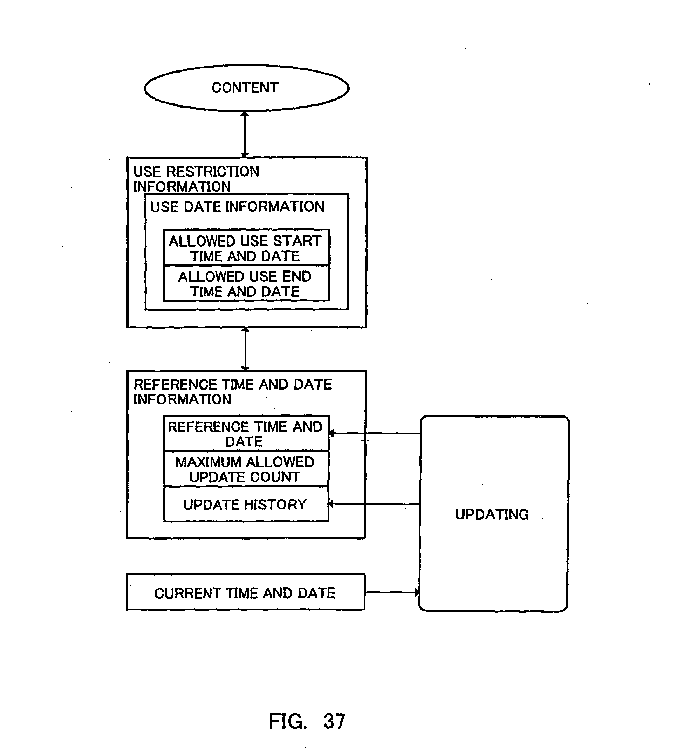

Under the above-described method, as illustrated in FIG. 37, the content management method according to the present invention is devised so that the reference time and date information further contains allowed reference time and date correction count and reference time and date correction count, and in a case where the reference time and date correction count does not exceed the allowed reference time and date correction count, the reference time and date information is updated with the current time and date even if the current time and date is a time and date before the reference time and date, and the reference time and date correction count is subjected to updating after the updating of the reference time and date information. According to this method, even in a situation where a user makes erroneous clock setting, it is possible to offer a great user convenience by allowing the updating of reference time and date up to allowed reference time and date correction count.

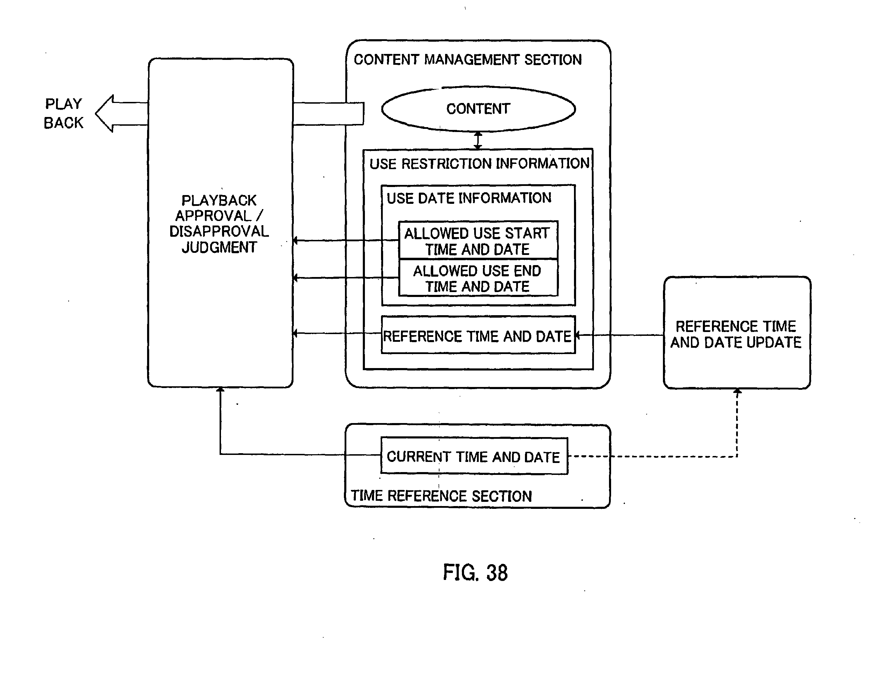

As illustrated in FIG. 38, the content playback apparatus according to the present invention adopts a configuration which comprises a content management section that implements a content management method claimed in claim 54 or 62, where the playback of content is executed only in a case where current time and date is a time and date after the reference time and date information, and in addition, where the current time and date is a time and date allowed by the allowed use start time and date and the allowed use end time and date contained in use restriction information on the content. According to this configuration, it is possible to prevent an unauthorized playback of content which may be done by the tampering of a clock in a content playback apparatus by utilizing reference time and date information.

Under the above-described configuration, as illustrated in FIG. 38, the content playback apparatus according to the present invention adopts a configuration where the playback of the content is disallowed in a case where the current time and date is a certain time and days or greater after the reference time and date when the reference time and date information is compared with the current time and date. According to this configuration, it is possible to prevent an unauthorized playback of content which may be done by the setting of a clock in an apparatus way into a future time and date.

Under the above-described configuration, as illustrated in FIG. 38, the content playback apparatus according to the present invention adopts a configuration where the updating of the reference time and date information is done in a case where the playback of the content is started.

Under the above-described configuration, as illustrated in FIG. 38, the content playback apparatus according to the present invention adopts a configuration where content and its use restriction information is stored and managed in a storage medium by the content management section.

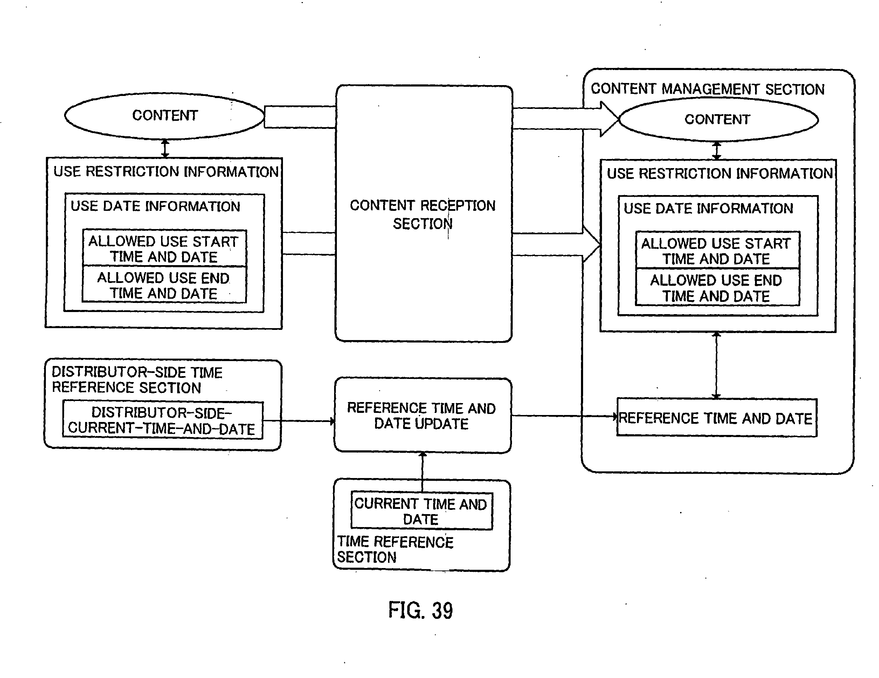

As illustrated in FIG. 39, the content storage apparatus according to the present invention adopts a configuration which comprises a content management section that implements a content management method claimed in claim 54 or 68, and a content reception section that receives content and its use restriction information, where the updating of the reference time and date information is executed at the time of content reception. According to this configuration, it is possible to prevent an unauthorized playback of content which may be done by the tampering of a clock by utilizing reference time and date information updated at the time of reception.

As illustrated in FIG. 39, the content storage apparatus according to the present invention adopts a configuration which comprises a content management section that implements a content management method claimed in either claim 54 or 68, and a content reception section that receives content, its use restriction information, and distributor-side-current-time-and-date, where the updating of the reference time and date information is executed at the time of content reception with the later time and date, that is, either the distributor-side-current-time-and-date or current time and date, by comparing the two. According to this configuration, by employing two kinds of time reference sections, it is possible to set reference time and date more exactly.

As made clear from the foregoing explanation, according to a content management method of the present invention, it is possible to set a use time limit on content flexibly because it is devised so that use restriction information on content contains use date information, which designates at least either one of an allowed use start time and date and an allowed use end time and date, and use time period information, which designates the length of an allowed use time period.

Moreover, by configuring in such a manner that this use date information is updated with an allowed use start time and date and an allowed use end time and date calculated out of use time period information, it becomes possible to determine a use time limit by referring only to the use date information.

Furthermore, by configuring in such a manner that the updating of the use date information is executable only in a case where current time and date is after allowed use start time and date designated by the use date information but before allowed use end time and date designated by the use date information, it is possible to prevent the rewriting of a use time limit with a time and date not complying with the use date information, which makes it further possible to interpret a use date adequately.

In addition, according to the present invention, by configuring in such a manner that use restriction information on content contains use date information and reference time and date information, it is possible to prevent an unauthorized viewing of content such as one done by the tampering of a clock in an apparatus.

Moreover, according to the present invention, by configuring in such a manner that the updating of reference time and date information is executed only in a case where current time and date is a time and date after the reference time and date information, it is possible to prevent an unauthorized tampering of a clock such as one done in a case where the reference time and date information is made practically invalid by turning reference time and date back.

Furthermore, according to the present invention, with a configuration where reference time and date information contains allowed reference time and date correction count and reference time and date correction count, and where the reference time and date information is allowed to be updated with current time and date even if the current time and date is a time and date before reference time and date in a case where the reference time and date correction count does not exceed the allowed reference time and date correction count, it is possible to update the reference time and date in a situation where a user makes erroneous clock setting, and so it is ensured that user convenience is not sacrificed.

In addition, according to the present invention, it is possible to prevent the tampering of use restriction information or to detect whether it has been tampered or not by storing use restriction information and reference time and date information into a protective area, encrypted if necessary, and by having a check value for the detection of a tampering.

Moreover, according to the content playback apparatus which implements the above-described content management method, it is possible to play content back in compliance with a use time limit.

Furthermore, according to the content management apparatus which implements the above-described content management method, at the time of copying or moving content with use time limit information attached thereto between an apparatus and a storage medium, it is possible to reduce the processing load of a content playback apparatus by interpreting use time period information to update use date information. In addition, it is possible to impose a limit not only on the playback of content but also the moving or copying thereof with use time limit information.

In addition, according to this content management apparatus, at the time of copying or moving content with use time limit information attached thereto between an apparatus and a storage medium, it is possible to prevent an unauthorized act of circumventing a restriction imposed on content viewing, which is based on reference time and date, by willfully moving or copying the content, where such prevention is done by also updating the reference time and date information.

Moreover, according to the content storage apparatus which implements this content management method, it is possible to prevent an unauthorized playback of content which may be done by the tampering of a clock by utilizing reference time and date information updated at the time of reception.

Furthermore, the reference time and date correction apparatus according to the present invention is capable of correcting a reference time and date which has been rewritten due to erroneous clock setting made by a user into an appropriate time and date.

This specification is based on the Japanese Patent Application No. 2001-208025 filed on July 9, 2001, entire content of which is expressly incorporated by reference herein.

### INDUSTRIAL APPLICABILITY

The present invention is suitably applicable to, for example, a handheld terminal apparatus and a storage medium which is able to be inserted / attached / mounted therein/to/on.

## Claims

1. A content management method for managing content and use restriction information indicating terms of use for a user thereof in association with each other, wherein the use restriction information contains allowed use start time and date information indicating allowed use start time and date of the content, and/or allowed use end time and date information indicating allowed use end time and date of the content, and use time period information designating a length of a time period for allowable use of the content.

2. The content management method according to claim 1, wherein the allowed use start time and date information and the allowed use end time and date information is updated based on a calculation result which is figured out of the use time period information in accordance with a predetermined method.

3. The content management method according to claim 2, wherein the use time period information further contains a use time period processing flag, wherein a value of the use time period processing flag is updated after updating the allowed use start time and date information and the allowed use end time and date information.

4. The content management method according to claim 2 or 3, wherein, in the updating of the allowed use start time and date information and the allowed use end time and date information, a rewriting is done with current time and date as allowed use start time and date, whereas a rewriting is done with a time and date which is given after an addition of the use time period information onto the current time and date as allowed use end time and date.

5. A content management apparatus for managing content and use restriction information indicating terms of use for a user thereof in association with each other, wherein the use restriction information contains allowed use start time and date information indicating allowed use start time and date of the content, and/or allowed use end time and date information indicating allowed use end time and date of the content, and use time period information designating a length of a time period for allowable use of the content.

6. A program for having a content management apparatus execute a content management method for managing content and use restriction information indicating terms of use for a user thereof in association with each other, wherein the use restriction information contains allowed use start time and date information indicating allowed use start time and date of the content, and/or allowed use end time and date information indicating allowed use end time and date of the content, and use time period information designating a length of a time period for allowable use of the content.

7. A content management method for managing content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, and in said method, in the updating of the allowed use start time and date information and the allowed use end time and date information, a rewriting is done with current time and date as the allowed use start time and date, whereas a rewriting is done with a time and date which is given after an addition of the use time period information onto the current time and date as the allowed use end time and date only in a case where the time and date given after the addition of the use time period information onto the current time and date is a time and date before the allowed use end time and date.

8. The content management method according to claim 7, wherein the use time period information further contains a use time period processing flag, wherein a value of the use time period processing flag is updated after updating the allowed use start time and date information and the allowed use end time and date information.

9. A program for having a content management apparatus execute a content management method for managing content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, and in said method, in the updating of the allowed use s'tart time and date information and the allowed use end time and date information, a rewriting is done with current time and date as the allowed use start time and date, whereas a rewriting is done with a time and date which is given after an addition of the use time period information onto the current time and date as the allowed use end time and date only in a case where the time and date given after the addition of the use time period information onto the current time and date is a time and date before the allowed use end time and date.

10. A content management apparatus which manages content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, the content management apparatus comprising:
a content management section that does, in the updating of the allowed use start time and date information and the allowed use end time and date information, a rewriting with current time and date as the allowed use start time and date, whereas said section does a rewriting with a time and date which is given after an addition of the use time period information onto the current time and date as the allowed use end time and date only in a case where the time and date given after the addition of the use time period information onto the current time and date is a time and date before the allowed use end time and date.

11. The content management apparatus according to claim 10, wherein the use time period information further contains a use time period processing flag, wherein said content management section updates a value of the use time period processing flag after updating the allowed use start time and date information and the allowed use end time and date information.

12. A content playback apparatus which plays content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, wherein the content playback apparatus comprising:
a content management section that does, in the updating of the allowed use start time and date information and the allowed use end time and date information, a rewriting with current time and date as the allowed use start time and date, whereas said section does a rewriting with a time and date which is given after an addition of the use time period information onto the current time and date as the allowed use end time and date only in a case where the time and date given after the addition of the use time period information onto the current time and date is a time and date before the allowed use end time and date; and
a judgment section that judges whether a playback of the content is allowable or not by comparing current time and date, the allowed use start time and date information and the allowed use end time and date information, and the use time period information.

13. The content playback apparatus according to claim 12, wherein the use time period information further contains a use time period processing flag, wherein said content management section updates a value of the use time period processing flag after updating the allowed use start time and date information and the allowed use end time and date information.

14. A content management method for managing content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, and in said method, the allowed use start time and date information and the allowed use end time and date information is updated based on a calculation result which is figured out of the use time period information in accordance with a predetermined method, wherein the updating is done only in a case where current time and date is after allowed use start time and date designated by the use date information but before allowed use end time and date designated by the use date information.

15. The content management method according to claim 14, wherein the use time period information further contains a use time period processing flag, wherein a value of the use time period processing flag is updated after updating the allowed use start time and date information and the allowed use end time and date information.

16. The content management method according to claim 14 or 15, wherein, in the updating of the allowed use start time and date information and the allowed use end time and date information, a rewriting is done with current time and date as allowed use start time and date, whereas a rewriting is done with a time and date which is given after an addition of the use time period information onto the current time and date as allowed use end time and date.

17. A program for having a content management apparatus execute a content management method for managing content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, the program comprising the step of: updating the allowed use start time and date information and the allowed use end time and date information based on a calculation result which is figured out of the use time period information in accordance with a predetermined method;
wherein the updating is done only in a case where current time and date is after allowed use start time and date designated by the use date information but before allowed use end time and date designated by the use date information.

18. A content management apparatus which manages content and use restriction information in association with each other, the use restriction information indicating terms of use for a user thereof, wherein the use restriction information contains allowed use start time and date information indicating allowed use start time and date of the content, and/or allowed use end time and date information indicating allowed use end time and date of the content, and use time period information designating a length of a time period for allowable use of the content, the content management apparatus comprising:
a content management section that updates the allowed use start time and date information and the allowed use end time and date information based on a calculation result which is figured out of the use time period information in accordance with a predetermined method;
wherein said content management section does the updating only in a case where current time and date is after allowed use start time and date designated by the use date information but before allowed use end time and date designated by the use date information.

19. The content management apparatus according to claim 18, wherein the use time period information further contains a use time period processing flag, wherein said content management section updates a value of the use time period processing flag after updating the allowed use start time and date information and the allowed use end time and date information.

20. The content management apparatus according to claim 18 or 19, wherein, in the updating of the allowed use start time and date information and the allowed use end time and date information, said content management section does a rewriting with current time and date as allowed use start time and date, while rewriting with a time and date which is given after an addition of the use time period information onto the current time and date as allowed use end time and date.

21. A content playback apparatus which plays content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, the content playback apparatus comprising:
a content management section that updates the allowed use start time and date information and the allowed use end time and date information based on a calculation result which is figured out of the use time period information in accordance with a predetermined method and that does the updating only in a case where current time and date is after allowed use start time and date designated by the use date in'formation but before allowed use end time and date designated by the use date information; and
a judgment section that judges whether a playback of the content is allowable or not by comparing current time and date, the allowed use start time and date information and the allowed use end time and date information, and the use time period information.

22. The content playback apparatus according to claim 21, wherein the use time period information further contains a use time period processing flag, wherein said content management section updates a value of the use time period processing flag after updating the allowed use start time and date information and the allowed use end time and date information.

23. The content playback apparatus according to claim 21 or 22, wherein, in the updating of the allowed use start time and date information and the allowed use end time and date information, said content management section does a rewriting with current time and date as allowed use start time and date, while rewriting with a time and date which is given after an addition of the use time period information onto the current time and date as allowed use end time and date.

24. The content management method according to any of claims 1, 7, or 14, wherein the use restriction information is stored in protected area.

25. The content management method according to any of claims 1, 7, or 14, wherein the use restriction information is stored in encrypted form.

26. The content management method according to any of claims 1, 7, or 14, wherein the use restriction information further contains a check value for detecting a tampering.

27. A content storage medium in which content is stored according to the content management method claimed in any of claims 1, 7, or 14.

28. A content playback apparatus which plays content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, the content playback apparatus comprising:
a judgment section that judges whether a playback of the content is allowable or not by comparing current time and date, the allowed use start time and date information and the allowed use end time and date information, and the use time period information.

29. A content playback apparatus which plays content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, the content playback apparatus comprising:
an updating section that updates the allowed use start time and date information and the allowed use end time and date information; and
a judgment section that judges whether a playback of the content is allowable or not by comparing current time and date, the updated allowed use start time and date information and the updated allowed use end time and date information after the updating of the allowed use start time and date information and the allowed use end time and date information by said updating section.

30. The content playback apparatus according to claim 29, wherein said judgment section allows a playback of the content only in a case where the current time and date is after the updated allowed use start time and date but before the updated allowed use end time and date.

31. The content playback apparatus according to claim 29, wherein the use restriction information further contains allowed playback count information indicating allowed playback count of the content, wherein said judgment section judges whether the playback of the content is allowable or not based on a result of comparing the current time and date, the updated allowed use start time and date information and the updated allowed use end time and date information, and on the allowed playback count information.

32. The content playback apparatus according to claim 29, wherein the updating of the use date information is done only in a case where the playback of the content is allowable.

33. The content playback apparatus according to claim 29 or 32, wherein the updating of the allowed use start time and date information and the allowed use end time and date information is done at the time of downloading the content.

34. A content playback method for playing content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, the content playback method comprising the steps of: updating the allowed use start time and date information and the allowed use end time and date information; and
judging whether a playback of the content is allowable or not by comparing current time and date, the updated allowed use start time and date information and the updated allowed use end time and date information after the updating of the allowed use start time and date information and the allowed use end time and date information in said updating step.

35. A program for having a content playback apparatus execute a content playback method for playing content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, the content playback method comprising the steps of: updating the allowed use start time and date information and the allowed use end time and date information; and
judging whether a playback of the content is allowable or not by comparing current time and date, the updated allowed use start time and date information and the updated allowed use end time and date information after the updating of the allowed use start time and date information and the allowed use end time and date information in said updating step.

36. A content playback apparatus which plays content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, and in addition to that, the use time period information contains a use time period processing flag, the content playback apparatus comprising:
an updating section that updates the allowed use start time and date information and the allowed use end time and date information and further updates the use time period processing flag in accordance with the execution of the updating thereof, but does not update the allowed use start time and date information and the allowed use end time and date information in a case where the use time period processing flag has been updated; and
a judgment section that judges whether the playback of the content is allowable or not by comparing current time and date, the allowed use start time and date information, and the allowed use end time and date information.

37. The content playback apparatus according to claim 36, wherein the updating of the allowed use start time and date information and the allowed use end time and date information is done at the time of initial playback of the content.

38. The content playback apparatus according to any of claims 28 - 32, 36, or 37, wherein content and use restriction information is stored and managed in a storage medium by said content management section.

39. A content playback method for playing content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, and in addition to that, the use time period information contains a use time period processing flag, the content playback method comprising the steps of: updating the allowed use start time and date information and the allowed use end time and date information and further updating the use time period processing flag in accordance with the execution of the updating thereof, but not updating the allowed use start time and date information and the allowed use end time and date information in a case where the use time period processing flag has been updated; and
judging whether the playback of the content is allowable or not by comparing current time and date, the allowed use start time and date information, and the allowed use end time and date information.

40. A program for having a content playback apparatus execute a content playback method for playing content back in addition to managing the content and use restriction information, which indicates terms of use for a user thereof, in association with each other, wherein the use restriction information contains allowed use start time and date information indicating allowed use start time and date of the content, and/or allowed use end time and date information indicating allowed use end time and date of the content, and use time period information designating a length of a time period for allowable use of the content, and in addition to that, the use time period information contains a use time period processing flag, the content playback method comprising the steps of: updating the allowed use start time and date information and the allowed use end time and date information and further updating the use time period processing flag in accordance with the execution of the updating thereof, but not updating the allowed use start time and date information and the allowed use end time and date information in a case where the use time period processing flag has been updated; and
judging whether the playback of the content is allowable or not by comparing current time and date, the allowed use start time and date information, and the allowed use end time and date information.

41. A content management apparatus comprising:
a first content management section that implements a content management method according to any of claims 1, 7, or 14 and manages content and its use restriction information which is retained internally;
a second content management section that implements a content management method according to any of claims 1, 7, or 14 and manages content and its use restriction information which is stored in a storage medium; and
a content move / copy section that moves or copies the content and its use restriction information between the first content management section and the second content management section.

42. A content management method for moving or copying content and its use restriction information between a first content management section that implements a content management method according to any of claims 1, 7, or 14 and manages content and its use restriction information which is retained internally and a second content management section that implements a content management method according to any of claims 1, 7, or 14 and manages content and its use restriction information which is stored in a storage medium.

43. A program for having a content management apparatus execute a content management method for moving or copying content and its use restriction information between a first content management section that implements a content management method according to any of claims 1, 7, or 14 and manages content and its use restriction information which is retained internally and a second content management section that implements a content management method according to any of claims 1, 7, or 14 and manages content and its use restriction information which is stored in a storage medium.

44. A content management apparatus comprising:
a first content management section that implements a content management method according to claim 2 andmanages content and its use restriction information which is retained internally;
a second content management section that implements a content management method according to claim 2 andmanages content and its use restriction information which is stored in a storage medium;
a content move / copy section that moves or copies content and its use restriction information between the first content management section and the second content management section; and
a use date information updating section that updates the allowed use start time and date information and the allowed use end time and date information;
wherein said use date information updating section updates the allowed use start time and date information and the allowed use end time and date information.

45. The content management apparatus according to claim 44, wherein the updating of the allowed use start time and date information and the allowed use end time and date information is done at the time of moving or copying the content.

46. The content management apparatus according to claim 45 wherein, at the time of content copying, allowed use start time and date information and allowed use end time and date information in use restriction information on content at a copy origin is not subjected to updating, whereas allowed use start time and date information and allowed use end time and date information in use restriction information on content at a copy target only is subjected to updating.

47. The content management apparatus according to claim 45 wherein, at the time of content copying, both of allowed use start time and date information and allowed use end time and date information in use restriction information on content at a copy origin and allowed use start time and date information and allowed use end time and date information in use restriction information on content at a copy target are subjected to updating.

48. The content management apparatus according to claim 44, wherein the moving or copying of the content is executed only in a case where current time and date is after the allowed use start time and date and/or where the current time and date is before the allowed use end time and date.

49. A content management method comprising:
a content move / copy step of moving or copying content and its use restriction information between a first content management section that implements a content management method according to claim 2 and manages content and its use restriction information which is retained internally and a second content management section that implements a content management method according to claim 2 and manages content and its use restriction information which is stored in a storage medium; and
a use date information updating step of updating the allowed use start time and date information and the allowed use end time and date information;
wherein said use date information updating section updates the allowed use start time and date information and the allowed use end time and date information.

50. A program for having a content management apparatus execute a content management method comprising:
a content move / copy step of moving or copying content and its use restriction information between a first content management section that implements a content management method according to claim 2 and manages content and its use restriction information which is retained internally and a second content management section that implements a content management method according to claim 2 and manages content and its use restriction information which is stored in a storage medium; and
a use date information updating step of updating the allowed use start time and date information and the allowed use end time and date information;
wherein said use date information updating section updates the allowed use start time and date information and the allowed use end time and date information.

51. A content management apparatus comprising:
a first content management section that implements a content management method according to either claim 7 or 14 and manages content and its use restriction information which is retained internally;
a second content management section that implements a content management method according to either claim 7 or 14 and manages content and its use restriction information which is stored in a storage medium;
a content move / copy section that moves or copies content and its use restriction information between the first content management section and the second content management section; and
a use date information updating section that updates the allowed use start time and date information and the allowed use end time and date information;
wherein said use date information updating section updates the allowed use start time and date information and the allowed use end time and date information.

52. A content management method comprising:
a content move / copy step of moving or copying content and its use restriction information between a first content management section that implements a content management method according to claim 2 and manages content and its use restriction information which is retained internally and a second content management section that implements a content management method according to claim 2 and manages content and its use restriction information which is stored in a storage medium; and
a use date information updating step of updating the allowed use start time and date information and the allowed use end time and date information;
wherein said use date information updating section updates the allowed use start time and date information and the allowed use end time and date information.

53. A program for having a content management apparatus execute a content management method comprising:
a content move / copy step of moving or copying content and its use restriction information between a first content management section that implements a content management method according to claim 2 and manages content and its use restriction information which is retained internally and a second content management section that implements a content management method according to claim 2 and manages content and its use restriction information which is stored in a storage medium; and
a use date information updating step of updating the allowed use start time and date information and the allowed use end time and date information;
wherein said use date information updating section updates the allowed use start time and date information and the allowed use end time and date information.

54. A content management method for managing content and its use restriction information in association with each other, wherein the use restriction information contains allowed use start time and date information and/or allowed use end time and date information, and reference time and date information.

55. The content management method according to claim 54, wherein the reference time and date information is updated with current time and date.

56. The content management method according to claim 55, wherein the updating of the reference time and date information is done only in a case where current time and date is a time and date after the reference time and date information.

57. The content management method according to claim 56, wherein the reference time and date information further contains allowed reference time and date correction count and reference time and date correction count, and in a case where the reference time and date correction count does not exceed the allowed reference time and date correction count, the reference time and date information is updated with the current time and date even if the current time and date is a time and date before the reference time and date, and the reference time and date correction count is subjected to updating after the updating of the reference time and date information.

58. The content management method according to claim 54, wherein the reference time and date information is updated with a time and date which is given after an addition of a certain predetermined time onto current time and date.

59. The content management method according to claim 58, wherein the updating of the reference time and date information is done only in a case where current time and date is a time and date after the reference time and date information.

60. The content management method according to any of claims 54 through 57, wherein the use restriction information and the reference time and date information is stored in protected area.

61. The content management method according to any of claims 54 through 57, wherein the use restriction information and the reference time and date information is stored in encrypted form.

62. The content management method according to claim 60, wherein the use restriction information and the reference time and date information is stored in encrypted form.

63. The content management method according to any of claims 54 through 57, wherein the use restriction information and the reference time and date information further contains a check value for detecting a tampering.

64. The content management method according to claim 60, wherein the use restriction information and the reference time and date information further contains a check value for detecting a tampering.

65. The content management method according to claim 61, wherein the use restriction information and the reference time and date information further contains a check value for detecting a tampering.

66. A program for having a content management apparatus execute a content management method for managing content and its use restriction information in association with each other, wherein the use restriction information contains allowed use start time and date information and/or allowed use end time and date information, and reference time and date information.

67. A content management apparatus that manages content and its use restriction information in association with each other, wherein the use restriction information contains allowed use start time and date information and/or allowed use end time and date information, and reference time and date information.

68. A content management method for managing content and its use restriction information in association with each other, wherein the use restriction information contains allowed use start time and date information and/or allowed use end time and date information, said method managing reference time and date information which is commonly referred to by a plurality of content.

69. The content management method according to claim 68, wherein the reference time and date information is updated with current time and date.

70. The content management method according to claim 68, wherein the reference time and date information is updated with a time and date which is given after an addition of a certain predetermined time onto current time and date.

71. A program for having a content management apparatus execute a content management method for managing content and its use restriction information in association with each other, wherein the use restriction information contains allowed use start time and date information and/or allowed use end time and date information, said method comprising a management step of: managing reference time and date information which is commonly referred to by a plurality of content.

72. A content management apparatus that manages content and its use restriction information in association with each other, wherein the use restriction information contains allowed use start time and date information and/or allowed use end time and date information, said apparatus managing reference time and date information which is commonly referred to by a plurality of content.

73. A content storage medium in which content is stored according to the content management method claimed in claim 54, or 68.

74. A content playback apparatus comprising:
a content management section that implements a content management method according to claim 54 or 68;
wherein the playback of content is executed only in a case where current time and date is a time and date after the reference time and date information, and in addition, where the current time and date is a time and date allowed by the allowed use start time and date and the allowed use end time and date contained in use restriction information on the content.

75. A content playback method comprising:
a content management step of implementing a content management method according to claim 54 or 68;
wherein the playback of content is executed only in a case where current time and date is a time and date after the reference time and date information, and in addition, where the current time and date is a time and date allowed by the allowed use start time and date and the allowed use end time and date contained in use restriction information on the content.

76. A program for having a content playback apparatus execute a content playback method comprising:
a content management step of implementing a content management method according to claim 54 or 68;
wherein the playback of content is executed only in a case where current time and date is a time and date after the reference time and date information, and in addition, where the current time and date is a time and date allowed by the allowed use start time and date and the allowed use end time and date contained in use restriction information on the content.

77. The content playback apparatus according to claim 74, wherein the playback of the content is disallowed in a case where the current time and date is a certain time and days or greater after the reference time and date when the reference time and date information is compared with the current ti'me and date.

78. The content playback apparatus according to claim 74, wherein the updating of the reference time and date information is done in a case where the playback of the content is started.

79. The content playback apparatus according to claim 74, wherein content and use restriction information is stored and managed in a storage medium by said content management section.

80. A content storage apparatus comprising:
a content management section that implements a content management method according to claim 54 or 68; and
a content reception section that receives content and its use restriction information;
wherein the updating of the reference time and date information is executed at the time of content reception.

81. A content storage method comprising:
a content management step of implementing a content management method according to claim 54 or 68; and
a content reception step of receiving content and its use restriction information;
wherein the updating of the reference time and date information is executed at the time of content reception.

82. A program for having a content storage apparatus execute a content storage method comprising:
a content management step of implementing a content management method according to claim 54 or 68; and
a content reception step of receiving content and its use restriction information;
wherein the updating of the reference time and date information is executed at the time of content reception.

83. A content storage apparatus comprising:
a content management section that implements a content management method according to either claim 54 or 68; and
a content reception section that receives content, its use restriction information, and distributor-side-current-time-and-date;
wherein the updating of the reference time and date information is executed at the time of content reception with the later time and date, which is eitherthedistributor-side-current-time-and-date or current time and date, by comparing the two.

84. A content storage method comprising:
a content management step of implementing a content management method according to either claim 54 or 68; and
a content reception step of receiving content, its use restriction information, and distributor-side-current-time-and-date;
wherein the updating of the reference time and date information is executed at the time of content reception with the later time and date, which is either the distributor-side-current-time-and-date or current time and date, by comparing the two.

85. A program for having a content storage apparatus execute a content storage method comprising:
a content management step of implementing a content management method according to either claim 54 or 68; and
a content reception step of receiving content, its use restriction information, and distributor-side-current-time-and-date;
wherein the updating of the reference time and date information is executed at the time of content reception with the later time and date, which is either the distributor-side-current-time-and-date or current time and date, by comparing the two.

86. A content management apparatus comprising:
a first content management section that implements a content management method according to claim 54 or 68 and manages content and its use restriction information which is retained internally;
a second content management section that implements a content management method according to claim 54 or 68 and manages content and its use restriction information which is stored in a storage medium;
a content move / copy section that moves or copies the content and its use restriction information between the first content management section and the second content management section; and
a reference time and date information updating section that updates the reference time and date information.

87. A content management method comprising:
a content move / copy step of moving or copying content and its use restriction information between a first content management section that implements a content management method according to claim 54 or 68 and manages content and its use restriction information which is retained internally and a second content management section that implements a content management method according to claim 54 or 68 and manages content and its use restriction information which is stored in a storage medium; and
a reference time and date information updating step of updating the reference time and date information.

88. A program for having a content management apparatus execute a content management method comprising:
a content move / copy step of moving or copying content and its use restriction information between a first content management section that implements a content management method according to claim 54 or 68 and manages content and its use restriction information which is retained internally and a second content management section that implements a content management method according to claim 54 or 68 and manages content and its use restriction information which is stored in a storage medium; and
a reference time and date information updating step of updating the reference time and date information.

89. The content management apparatus according to claim 86, wherein a comparison is made between the reference time and date and the allowed use end time and date, and the moving or copying of the content is executed only in a case where the reference time and date is a time and date before the allowed use end time and date.

90. The content management apparatus according to claim 86, wherein the reference time and date information updating section updates the reference time and date information at the time of moving or copying the content and its use restriction information.

91. The content management apparatus according to claim 86, wherein the reference time and date information updating section compares reference time and date information retained internally in the content management apparatus with reference time and date information retained in a storage medium, and rewrites the reference time and date information of the earlier reference time and date with the reference time and date information of the later reference time and date.

92. The content management apparatus according to claim 86 which rewrites the reference time and date information retained internally and/or the reference time and date information retained in a storage medium with current time and date.

93. The content management apparatus according to claim 86 which rewrites the reference time and date information retained internally and/or the reference time and date information retained in a storage medium with the last time and date among current time and date, the reference time and date information retained internally, and the reference time and date information retained in a storage medium.

94. A reference time and date correction apparatus comprising:
a current time and date acquisition section that acquires precise current time and date by referring to a given reliable external clock in a case where reference time and date information is stored in a storage medium in which content and its use restriction information is stored;
wherein the reference time and date information is rewritten with the acquired current time and date.
